# EUROPÄISCHE PATENTANMELDUNG

(11) **EP 4 796 343 A1**
(43) Veröffentlichungstag der Anmeldung: **26.08.2026**
(21) Anmeldenummer: 26160361.7
(22) Anmeldetag: 24.02.2026
(51) Int. Cl.: B60B 1/02, B60B 1/04, F16B 39/22, B60B 1/00

(54) **LAUFRADKOMPONENTE FÜR EIN FAHRRAD**

(30) Priorität: 25.02.2025 DE 102025107099
(71) Anmelder: DT Swiss AG, 2504 Biel (CH)
(72) Erfinder: Henig, Andreas, CH-2504 Biel (CH); Becker, Fabian, CH-2504 Biel (CH)
(74) Vertreter: BSB Patentanwälte Schütte & Engelen Partnerschaft mbB

(57) **Zusammenfassung**

Laufradkomponente für ein Fahrzeug (100) und insbesondere für Fahrräder, umfassend ein Speichensystem (40) mit zwei miteinander zusammenwirkenden Verbindungselementen (41, 42), nämlich mit einem im Betrieb auf Zug belasteten und als Speiche (10) ausgebildeten Verbindungselement (41) und mit wenigstens einem als Koppelelement (50) ausgebildeten Verbindungselement (42), wie z.B. einem Speichennippel (50a). Die Speiche (10) erstreckt sich in axialer Richtung (7) und umfasst ein Mittelstück (11) und zwei Endstücke (20, 30), um die Speiche (10) mittels der Endstücke (20, 30) lösbar mit einer Nabe (108) und mit einer Felge (109) zu verbinden. Die beiden Verbindungselemente (41, 42), nämlich das Koppelelement (50) und die Speiche (10), weisen miteinander zusammenwirkende Gewinde (43, 44) auf, um die Speiche (10) und das Koppelelement (50) miteinander zu verbinden, wobei eines der Gewinde (44) als Innengewinde (70) und eines der Gewinde (43) als Außengewinde (60) ausgebildet ist. Im montierten Zustand (8) nimmt eine radiale Eingriffstiefe (49) der beiden miteinander verschraubten Gewinde (43, 44) über der axialen Gewindelänge (60a, 70a) zu.

## Beschreibung

Die vorliegende Erfindung betrifft eine Laufradkomponente für ein Fahrzeug und insbesondere für ein im bestimmungsgemäßen Normalbetrieb oder Regelbetrieb wenigstens teilweise muskelbetriebenes Zwei- oder Mehrrad wie ein Fahrrad und umfasst ein Speichensystem mit wenigstens zwei miteinander zusammenwirkenden Verbindungselementen, nämlich mit einem als Speiche ausgebildeten Verbindungselement und mit einem als Koppelelement ausgebildeten Verbindungselement, wie z.B. einem Speichennippel. Eine Speiche des Speichensystems umfasst ein Mittelstück und zwei Endstücke, um die Speiche mit einer Nabe eines Laufrades bzw. einer Felge eines Laufrades lösbar zu verbinden. Dabei kann die Speiche aus Faserverbundwerkstoff gefertigt sein und umfasst dann ein Matrixmaterial und darin eingebettete Verstärkungselemente.

Es sind Laufräder für Fahrräder aus Faserverbundwerkstoff bekannt geworden, bei denen die Speichen direkt mit der Felge zusammen hergestellt werden. Solche Laufräder können ein geringes Gewicht aufweisen, sind aber komplex in der Herstellung und können nicht ohne Weiteres gewartet werden. Schon bei kleineren Defekten muss regelmäßig das ganze Laufrad ausgetauscht werden, was nicht sehr nachhaltig ist. Oder das Laufrad muss aufwendig repariert werden.

Mit der US 5,350,221 ist eine separate Speiche aus Faserverbundwerkstoff bekannt geworden, die durch ein Spritzgießverfahren hergestellt wird. Dabei wird in einen Hohlraum einer Herstellform kurzfasriger Faserverbundwerkstoff eingespritzt, sodass sich das Fasermaterial in dem Hohlraum der Form homogen verteilt. An dem einen Ende weist die Speiche einen gekröpften Kopf und an dem anderen Ende ein Gewinde zum Verschrauben mit einem Speichennippel auf. Eine solche Speiche hat sich in den letzten Jahrzehnten am Markt nicht durchgesetzt. In der gleichen Schrift ist auch eine Speiche beschrieben, bei der metallische Enden eingesetzt werden, sodass die Kraft ableitenden Stellen an der Speiche aus Metall gefertigt sind.

Die US 2024/0051333 A1 offenbart eine Speiche aus Faserverbundwerkstoff, wobei zunächst ein zentraler und langgestreckter Speichenkörper durch ein Injektionsverfahren hergestellt wird, der an den Oberflächen der Enden jeweils eine Wellenstruktur aufweist. Auf die Wellenstruktur wird ein Verbindungssegment mit einer angepassten welligen Innenstruktur aufgebracht. Die Wellenstrukturen stellen eine Reibungserhöhungsstruktur zur Verfügung und verbessern den axialen Halt von dem Verbindungssegment und dem Speichenkörper. Dadurch soll ein Gleiten des Verbindungssegments entlang des Speichenkörpers verhindert werden. Durch ein Sägezahngewinde werden in axialer Richtung breitere Gewindegänge gebildet, was die Übertragbarkeit von axialen Zugkräften verbessert. Fraglich ist, ob die Speiche den hohen Belastungen Stand hält.

Mit der EP 3 459 759 B1 ist eine Speiche aus einem Faserverbundwerkstoff bekannt geworden, bei der der Speichenkörper durch ein Pultrusionsverfahren hergestellt wird. An dem Speichenkörper aus Faserverbundwerkstoff werden gestufte Flächen und geneigte Bereiche vorgesehen, auf die Hülsen aufgesteckt werden, die aus rostfreiem Stahl bestehen und die Verbindung zu der Nabe bzw. der Felge herstellen. Eine solche Speiche funktioniert grundsätzlich, ist aber komplex in der Herstellung.

Aus der WO 03/020535A2 ist eine mit Fasern verstärkte Speiche für ein Fahrradrad bekannt geworden, die einen langgestreckten Speichenkörper aufweist, auf den Hülsen aufgesteckt werden, bevor die Enden des Speichenkörpers verdickt werden, um so die separaten Hülsen an dem Speichenkörper zu halten. Die zur Befestigung der Speiche an der Felge vorgesehene Hülse weist eine kugelförmige Auflage auf, um ein Ausrichten der Speiche zu ermöglichen. Die Hülse an dem anderen Ende umfasst ein Außengewinde, um die Speiche an der Nabe mit einem entsprechenden Gewinde zu verschrauben. Der Speichenkörper wird durch Pultrusion hergestellt. Auch diese Speiche ist funktionell zufriedenstellend und ermöglicht ein leichtes Gewicht. Nachteilig ist aber der erhebliche Herstellungsaufwand. Weiterhin ist es wünschenswert, die Stabilität des Speichensystems zu verbessern.

Es ist deshalb die Aufgabe der vorliegenden Erfindung, eine Laufradkomponente mit einem Speichensystem zur Verfügung zu stellen, welche hohen Belastungen Stand hält. Insbesondere soll das Speichensystem einfach herzustellen und zu montieren sein und die Spannung des Speichensystems soll nachstellbar sein.

Diese Aufgabe wird gelöst durch eine Laufradkomponente mit einem Speichensystem mit den Merkmalen des Anspruchs 1 und durch eine Laufradkomponente mit einem Koppelelement mit den Merkmalen des Anspruchs 18. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente für ein Fahrzeug und insbesondere für ein Fahrrad umfasst (wenigstens) ein Speichensystem mit zwei miteinander zusammenwirkenden Verbindungselementen (Speicheneinheiten), nämlich ein (im Betrieb auf Zug belastetes und) als Speiche ausgebildetes Verbindungselement und wenigstens ein als Koppelelement ausgebildetes Verbindungselement, wie z.B. einen Speichennippel. Auch andere Koppelelemente können verwendet werden. Die Verbindungselemente und insbesondere eine Speiche, ein Koppelelement und ein Speichennippel können auch als Speicheneinheiten bezeichnet werden. Die Speiche erstreckt sich in axialer Richtung (und ist insbesondere gerade ausgebildet und langgestreckt) und weist ein Mittelstück und zwei Endstücke auf, um die Speiche mittels der Endstücke lösbar mit einer Nabe (eines Laufrades) und mit einer Felge (des Laufrades) lösbar zu verbinden. Das Koppelelement und wenigstens ein Endstück der Speiche weisen miteinander zusammenwirkende Gewinde auf, um die Speiche und das Koppelelement miteinander zu verbinden bzw. zu verschrauben, wobei eines der Gewinde als Innengewinde und eines der Gewinde als Außengewinde ausgebildet ist. In einem montierten Zustand nimmt eine radiale Eingriffstiefe der beiden miteinander verschraubten Gewinde über wenigstens einen (erheblichen) Teil (einer axialen Länge eines oder beider Gewinde und/oder einen erheblichen Teil einer Eingriffslänge der beiden Gewinde) zu. Dadurch kann die Festigkeit der Verbindung des Speichensystems erheblich erhöht werden.

Die erfindungsgemäße Laufradkomponente hat viele Vorteile. Ein erheblicher Vorteil der erfindungsgemäßen Laufradkomponente besteht darin, dass die Belastbarkeit verbessert werden kann. Das Speichensystem kann hohe Zugkräfte übertragen. Im Grundsatz müssen die Belastungen im Betrieb durch die Gewinde der Verbindungselemente abgeführt werden. Das bedeutet, dass die Zähne der Gewinde die auftretende Last dauerhaft ableiten müssen. Die Zähne erstrecken sich einem Querschnitt (durch die Längsachse) von dem regelmäßig rotationssymmetrischen Körperabschnitt des Gewindes nach außen.

Vorteilhaft ist nun, dass die radiale Eingriffstiefe entlang der Längsache bzw. in der axialen Richtung zunimmt. Die radiale Eingriffstiefe kann auch als radialer Überlapp der Gewinde bzw. der Zähne des Gewindes bezeichnet werden. Die Zunahme der radialen Eingriffstiefe ermöglicht eine erheblich bessere Lastverteilung über der axialen Richtung. Dadurch muss nicht die erste vollständige Windung des Gewindes, die sich im Eingriff befindet, den höchsten Lastanteil tragen. Es ist eine erheblich bessere Lastverteilung über der Eingriffslänge möglich. Das erhöht die Stabilität und auch die Festigkeit der Gewindeverbindung. Die Gefahr des Abreißens ist geringer. Außerdem wird ein Kriechen in dem Material eines oder beider Gewinde reduziert. Insgesamt wird die Belastbarkeit und die Haltbarkeit verbessert. Eine einmal eingestellte Speichenspannung bleibt länger erhalten.

In bevorzugten Ausgestaltungen nimmt eine radiale Eingriffstiefe in Richtung einer axialen Mitte der Speiche ab. Vorzugsweise nimmt die radiale Eingriffstiefe mit einem Abstand von der Nabe zu.

Das Koppelelement wird vorzugsweise auf ein Ende der Speiche und insbesondere ein Endstück der Speiche aufgeschraubt. Die radiale Eingriffstiefe nimmt dann besonders bevorzugt in Richtung auf das andere Endstück der Speiche über einer Länge des Gewindes des Koppelelements (kontinuierlich oder quasi-kontinuierlich) ab.

Das Koppelelement weist in allen Ausgestaltungen insbesondere ein Kopfende mit einer Anlagefläche zur Abstützung auf. Das Kopfende mit der Anlagefläche dient insbesondere zur Erzeugung einer Speichenspannung an einem Bauteil wie der Nabe oder der Felge. Die Anlagefläche ist vorzugsweise abgerundet ausgebildet. Die radiale Eingriffstiefe nimmt dann über einer axialen Länge des Koppelelements in Richtung auf das Kopfende des Koppelelements ab.

In einer besonders bevorzugten Weiterbildung ist eines der beiden miteinander zusammenwirkenden Gewinde konisch ausgebildet. Das bedeutet insbesondere, dass ein Kerndurchmesser und ein Gewindedurchmesser konisch verlaufen. Das Gewinde in dem Koppelelement ist insbesondere zu dem Kopfende hin konisch ausgebildet.

Es ist auch möglich, dass eines der beiden miteinander zusammenwirkenden Gewinde über wenigstens einen (erheblichen) Teil (der axialen Gewindelänge) eine abnehmende Gewindetiefe aufweist und z.B. konisch ausgebildet ist. Dann nimmt eine radiale Eingriffstiefe der Gewinde in einer axialen Richtung zu (und in der anderen axialen Richtung ab).

Insbesondere weist die Speiche ein Außengewinde und das Koppelelement ein Innengewinde auf. In einem montierten Zustand sind die beiden Verbindungselemente miteinander verschraubt.

Die Verbindungselemente weisen insbesondere in dem Bereich der Gewinde jeweils einen Grundkörper und davon radial (nach außen bzw. nach innen) abstehende Zähne auf. Der Grundkörper und die Zähne sind dabei insbesondere einstückig ausgebildet. Eine Zahnform des Gewindes der Speiche kann einer Zahnform des Gewindes des Koppelelements entsprechen.

Es ist besonders bevorzugt, dass sich die Zahnform des Gewindes der Speiche von einer Zahnform des Gewindes des Koppelelements erheblich (d. h. signifikant) unterscheidet. Das kann die Festigkeit der Verbindung des Speichensystems erheblich erhöhen. Insbesondere wenn die Zähne aus unterschiedlichen Materialien bestehen.

Die Zähne können einen vollständig umlaufenden Gewindegang oder mehrere umlaufende Gewindegänge bilden. Das Koppelelement und die Speiche weisen insbesondere jeweils (wenigstens) einen Gewindegang auf. Ein Gewindegang kann durchgängig sein. Denkbar ist es auch, dass eine Vielzahl von einzelnen Zähnen radial von dem Grundkörper absteht. Die Vielzahl der einzelnen Zähne bildet dann den wenigstens einen Gewindegang. Bei einer solchen Konstellation können die tatsächlich abstehenden einzelnen Zähne voneinander entlang des Gewindegangs beabstandet sein.

Vorzugsweise ist (wenigstens) ein durchgängiger Gewindegang ausgebildet, an dem das Gewinde in einem Querschnitt die Form eines von dem Grundkörper abstehenden Zahnes hat.

In einer bevorzugten Ausgestaltung weisen die Verbindungselemente in einem Querschnitt durch die Längsachse (Symmetrieachse) jeweils einen Grundkörper und davon an den Gewinden radial (nach außen bzw. nach innen) abstehende Zähne auf. In dem Querschnitt kann sich eine Zahnform eines Zahns des Gewindes der Speiche von einer Zahnform eines Zahns des Gewindes des Koppelelements erheblich unterscheiden. Das kann die Festigkeit der Verbindung des Speichensystems insgesamt erhöhen. Insbesondere sind dabei im montierten Zustand die beiden Zähne an den Verbindungselementen benachbart angeordnet und liegen aneinander an. Die Zähne bzw. dadurch gebildeten Gewindegänge stützen sich aneinander ab.

In allen Ausgestaltungen und Weiterbildungen weist vorzugsweise das Innengewinde über wenigstens einen (erheblichen) Teil (der axialen Gewindelänge) einen zunehmenden freien Innendurchmesser auf. Das Innengewinde kann z.B. konisch ausgebildet sein. Eine radiale Eingriffstiefe der Gewinde nimmt in einer axialen Richtung zu. Besonders bevorzugt nimmt die (radiale) Eingriffstiefe der beiden Gewinde in einem montierten Zustand in einer axialen Richtung zu der Speichenmitte hin ab. Die Speichenmitte ist vorzugsweise an dem Mittelstück zwischen den Endstücken der Speiche. Dadurch wird das Gewinde am äußeren Ende entlastet. Der radiale Überlapp nimmt von dem nabenseitigen Enmde zu der Mitte der Speiche hin zu. Es ergibt sich eine bessere Lastverteilung in dem Gewinde.

Im Grundsatz gilt, dass je kleiner der Durchmesser beim Einschrauben wird (je weiter man die Speiche mit dem Gewinde in den Speichennippel einschraubt), desto mehr Kontaktfläche (radiale Eingriffstiefe) steht in radialer Richtung zur Verfügung und desto gleicher wird die Lastverteilung in dem Gewinde. Die Kontaktfläche nimmt quadratisch mit der radialen Eingriffstiefe zu. Eine solche Ausgestaltung ist vorteilhaft, weil in einem parallelen Gewinde die ersten Gewindegänge die Hauptlast tragen. Hiermit wird die Last über die Länge des Gewindes besser verteilt.

Vorzugsweise nimmt in dem montierten Zustand eine radiale Eingriffstiefe bzw. ein radialer Überlapp der Gewinde (kontinuierlich) über einen wesentlichen Teil der Eingriffslänge um insgesamt wenigstens 10% und insbesondere wenigstens 15%, 20% oder um wenigstens 25% zu. Eine sich daraus ergebende Kontaktfläche nimmt vorzugsweise um wenigstens 20% oder 30% oder 40% oder mehr zu. Auch 50% und mehr ist möglich.

Vorzugsweise nimmt ein freier Innendurchmesser des Innengewindes über einer axialen Länge des Innengewindes in dem Koppelelement (bzw. Speichennippel) (monoton und besonders bevorzugt im mathematischen Sinne streng monoton) zu bzw. ab (je nach betrachteter Richtung).

Eine radiale Eingriffstiefe kann insbesondere in axialer Richtung von Zahn zu Zahn stetig steigen. Das kann über einer Reihe von Zähnen oder über (nahezu) alle Zähne (Windungen) realisiert werden.

Insbesondere ist eine Innenkontur des Innengewindes in dem Koppelelement (bzw. dem Speichennippel) etwa konisch ausgebildet. Die Innenkontur muss über der axialen Länge in radialer Richtung nicht linear vergrößert werden. Die Innenkontur kann auch einen quadratisch oder exponentiell zunehmenden freien Innendurchmesser aufweisen. Die Innenkontur kann dann einen trompetenähnlichen Verlauf aufweisen.

Vorzugsweise ist ein Öffnungswinkel des Innengewindes in dem Koppelelement Speichennippel in axialer Richtung insgesamt (wenigstens abschnittsweise) etwa konisch ausgebildet.

Dabei ist es bevorzugt, dass das Innengewinde in dem Speichennippel etwa konisch (oder trompetenähnlich oder dgl.) ausgebildet ist.

Im Prinzip ergibt sich vorzugsweise eine Art von konischem Verlauf. Der Verlauf kann aber auch gestuft sein. Das ergibt (im Prinzip) über der Länge auch eine Art von konischer Kontur. Ebenso kann der Verlauf auch nicht-linear sein. Es kann auch ein welliger Verlauf ausgebildet sein, der insgesamt (im Durchschnitt) einen zunehmenden freien Innendurchmesser aufweist.

In bevorzugten Ausgestaltungen beträgt ein Öffnungswinkel der Innenkontur des Innengewindes vorzugsweise zwischen 0,5° oder 1° und 7° (oder bis zu 8° oder 10° oder mehr). Der Öffnungswinkel ist eine Art von Konuswinkel und liegt vorzugsweise zwischen 1,5° und 6° und insbesondere zwischen 2,5° und (4° oder) 5°. In einem konkreten Versuch wurden gute Ergebnisse mit einem Winkel von 3° erzielt. Der Öffnungswinkel entspricht vorzugsweise einem Konuswinkel für ein konisches Gewinde.

Vorzugsweise ist die Innenkontur des Innengewindes in dem Koppelelement (oder Speichennippel) in Richtung der (axialen Mitte der) Speiche konisch (sich öffnend) ausgebildet. Die Innenkontur des Innengewindes in dem Koppelelement ist in Richtung des Endes (Einführende) sich öffnend ausgebildet, an dem eine Speiche zum Verschrauben eingeführt wird.

Vorzugsweise verläuft ein Kerndurchmesser des Innengewindes in dem Koppelelement (und insbesondere dem Speichennippel) (wenigstens über der Eingriffslänge in dem montierten Zustand) in axialer Richtung (etwa) konisch. Die Verläufe von Kerndurchmesser und Innendurchmesser können analog und insbesondere (etwa) parallel) verlaufen.

In anderen Ausgestaltungen kann der Kerndurchmesser des Innengewindes auch konstant sein. Auch andere Verläufe des Kerndurchmessers des Innengewindes sind möglich. Der Überlapp der Zähne/Windungen der Gewinde wird bei einem zylindrischen Gegengewinde an sich nicht durch den Verlauf des Kerndurchmessers beeinflusst.

In bestimmten und auch bevorzugten Ausgestaltungen sind beide Gewinde wenigstens abschnittsweise konisch ausgebildet, wobei ein Öffnungswinkel des einen Gewindes und vorzugsweise des Innengewindes dann erheblich größer ist als ein Öffnungswinkel des anderen Gewindes und vorzugsweise des Außengewindes. Ein resultierender Öffnungswinkel als Differenz der beiden unterschiedlichen Öffnungswinkel von Innen- und Außengewinde liegt dann vorzugsweise zwischen 1° und 6° und insbesondere zwischen 2° und 5°.

In allen Ausgestaltungen beträgt ein Öffnungswinkel des Gewindes der Speiche vorzugsweise weniger als 1° oder 2°.

In konkret bevorzugten Ausgestaltungen ist das andere der beiden Gewinde (und insbesondere das Außengewinde der Speiche) im Wesentlichen zylindrisch ausgebildet. Dabei wird insbesondere ein Winkel kleiner als 0,5° auch als zylindrisch angesehen. Die axiale Länge der beiden Gewinde ist regelmäßig nicht so groß, dass ein minimaler Winkel eine Rolle spielt.

Insbesondere ändert sich ein Kerndurchmesser des Innengewindes in dem Koppelelement (bzw. Speichennippel) über einer Länge des Innengewindes und/oder einer Eingriffslänge beider Gewinde weniger als der freie Innendurchmesser des Innengewindes. Der Kerndurchmesser kann sich auch gar nicht ändern.

In bevorzugten Ausgestaltungen ist der Kerndurchmesser des Innengewindes wenigstens im Wesentlichen konstant über der Länge des Innengewindes. Bevorzugt ist ein zylindrischer Verlauf.

Vorzugsweise weisen die Verbindungselemente in dem Bereich der Gewinde jeweils einen Grundkörper und davon radial (nach außen bzw. nach innen) abstehende Zähne auf, wobei sich eine Zahnform des Gewindes der Speiche von einer Zahnform des Gewindes des Koppelelements vorzugsweise erheblich unterscheidet. Dadurch kann die Festigkeit der Verbindung des Speichensystems erhöht werden.

In einer Ausgestaltung weisen die Gewindegänge in einem Querschnitt jeweils einen von dem jeweiligen Grundkörper der Verbindungselemente radial nach außen bzw. nach innen abstehenden Zahn auf und in dem Querschnitt unterscheidet sich eine Zahnform des Gewindes der Speiche von einer Zahnform des Gewindes des Koppelelements erheblich, um die Festigkeit der Verbindung des Speichensystems zu erhöhen.

Die Zahnformen unterscheiden sich vorzugsweise. Egal wie eine Zahnform gedreht oder gespiegelt betrachtet wird, verbleibt dann ein signifikanter Unterschied. Dabei umfasst der Begriff "Zahnform" nicht nur die geometrische Formgebung, sondern auch deren Größe. Eine gleiche Zahnform liegt dann vor, wenn die Zähne geometrisch (nahezu) deckungsgleich sind. Die Zähne der beiden Gewinde greifen ineinander ein.

Wenn sich die Zähne der Gewinde unterscheiden, werden Möglichkeiten zur Verbesserung der Festigkeit eröffnet. So können unterschiedliche Materialien und/oder Wandstärken eingesetzt werden.

Die Festigkeit kann verbessert werden. Dabei kann insbesondere die Scherfestigkeit verbessert werden. Es ist auch möglich, das Kriechverhalten zu verbessern. Werden sowohl Scherfestigkeit und Kriechverhalten verbessert, wird die Festigkeit und damit insbesondere auch die Dauerfestigkeit in einem besonderen Maße gesteigert. Das ist insbesondere bei Speichensystemen vorteilhaft, die unterschiedliche Materialkombinationen oder Teile aus Faserverbundwerkstoffen einsetzen. Eine erhöhte Festigkeit trägt zu einer höheren Lebensdauer und einem geringeren Wartungsaufwand bei.

Bei Gewinden ist ein Querschnitt von Speichensystemen für Fahrräder aus dem Stand der Technik der ineinander eingreifenden Zähne regelmäßig identisch oder nahezu identisch. Das ist hier vorzugsweise nicht der Fall.

In bevorzugten Ausgestaltungen weist das Verbindungselement bzw. die Speicheneinheit mit einem Außengewinde einen Grundkörper auf. Der Grundkörper weist einen Kerndurchmesser auf bzw. definiert einen Kerndurchmesser. Der Kerndurchmesser tritt insbesondere an einem Gewindetal auf. Ein (von dem Grundkörper abstehender) Zahn des Außengewindes weist eine (definierte) Zahnform auf und erstreckt sich von der Basis des Zahns radial nach außen. Die Basis des Zahns wird durch den Kerndurchmesser (bzw. den Grundkörper) definiert. Von dort ragt der Zahn radial nach außen. Der Zahn mit der Zahnform umfasst zwei Zahnflanken (d.h. Gewindeflanken). Die Zahnflanken weisen einen Flankenwinkel zueinander auf. Eine Gewindetiefe ergibt sich aus der Differenz des (örtlichen) Außendurchmessers und des (örtlichen) Kerndurchmessers. Das Ergebnis dividiert durch zwei ergibt die Gewindetiefe. Eine Spitze des Zahns weist bei dem Außengewinde radial nach außen.

In bevorzugten Ausgestaltungen weist das Verbindungselement bzw. die Speicheneinheit mit einem Innengewinde (ebenfalls) einen Grundkörper auf. Der Grundkörper des Verbindungselements mit einem Innengewinde weist einen Kerndurchmesser auf bzw. definiert einen Kerndurchmesser. Der Kerndurchmesser tritt (ebenfalls) an einem Gewindetal auf. Der Zahn (des Innengewindes) weist eine (definierte) Zahnform auf und erstreckt sich von dem Grundkörper mit einem Kerndurchmesser aus radial nach innen. Der Zahn mit der (definierten) Zahnform umfasst zwei Zahnflanken (d.h. Gewindeflanken. Die Zahnflanken weisen einen Flankenwinkel zueinander auf. Eine Gewindetiefe (des Innengewindes) ergibt sich aus der Differenz von einem (lokalen) minimalem (freien) Durchmesser (Innendurchmesser) und einem (lokalen) Kerndurchmesser. Das Ergebnis dividiert durch zwei ergibt die (lokale) Gewindetiefe. Eine Spitze des Zahns des Innengewindes weist radial nach innen.

In allen Ausgestaltungen ist das Gewinde an einer Speiche insbesondere an einem Endstück ausgebildet und reicht dort insbesondere bis zum Ende.

Vorzugsweise bestehen wenigstens die Zähne der Verbindungselemente wenigstens teilweise aus unterschiedlichen Materialien. Das ermöglicht eine gezielte Ausgestaltung.

Insbesondere unterscheidet sich ein Kennwert der Zahnform des Gewindes der Speiche um mehr als 10% von einem Kennwert der Zahnform des Gewindes der Koppelkomponente. Vorzugsweise unterscheidet sich der Kennwert der Zahnform des Gewindes der Speiche um wenigstens 15%, 20%, 25%, 33% oder um 50% oder mehr von dem Kennwert der Zahnform des Gewindes der Koppelkomponente. Ein Kennwert kann dabei z.B. einen Wert wie insbesondere eine Abmessung, eine Fläche oder ein Volumen beschreiben oder repräsentieren.

Es ist möglich, dass ein Unterschiedsfaktor einer Abmessung der Zahnform des einen Verbindungselements zu einer (entsprechenden) Abmessung der Zahnform des anderen Verbindungselements wenigstens 110% oder wenigstens 120% oder mehr beträgt. Ein Unterschiedsfaktor von 1,1 oder 1,15 oder 1,2 oder 1,3 oder 1,4 oder 1,5 oder mehr ist bevorzugt.

Insbesondere ist ein Kennwert der Zahnform des Gewindes der Speiche erheblich größer ist als ein Kennwert der Zahnform des Gewindes der Koppelkomponente.

In vorteilhaften Weiterbildungen unterscheidet sich eine axiale Länge einer Basis der Zahnform des Gewindes des einen Verbindungselements erheblich von einer axialen Länge einer Basis der Zahnform des Gewindes des anderen Verbindungselements. Vorzugsweise ist eine Basis der Zahnform des Speichengewindes länger als eine Basis der Zahnform der Koppelkomponente bzw. des Speichennippels.

Dabei entspricht eine axiale Länge einer Basis der Zahnform der Speiche der axialen Länge des Zahns an dem Zahnfuß bzw. an dem Grundkörper. Das entspricht dem axialen Abstand (z.B. des Beginns oder Endes) zweier Gewindetäler des Gewindes.

Vorzugsweise ist eine Querschnittsfläche der Zahnform des Gewindes des einen Verbindungselements erheblich größer als eine Querschnittsfläche einer Zahnform (eines Zahns) des Gewindes des anderen Verbindungselements.

Vorzugsweise ist eine Querschnittsfläche der Zahnform des Speichengewindes größer als eine Querschnittsfläche der Zahnform des Speichennippelgewindes. Dabei wird unter einer Querschnittsfläche einer Zahnform die Fläche von der Basis bis zur Spitze verstanden.

Insbesondere wird das Volumen eines Gewindegangs berücksichtigt. Das wird aus der Querschnittsfläche und dem Umfang berechnet.

In allen Ausgestaltungen sind die beiden Gewinde insbesondere aneinander angepasst und füllen weitestgehend die Fläche und das Volumen zwischen den Verbindungselementen ausfüllen. Wenigstens über die Länge des Eingriffs der beiden Gewinde.

Die beiden miteinander verschraubten Gewinde regelmäßig wenigstens 80% oder 90% oder 95% oder mehr des Volumens zwischen den Verbindungselementen aus.

Vorzugsweise beträgt ein minimaler radialer Abstand einer Spitze eines Zahns zu einem zugeordneten Gewindetal kleiner als 1/4 oder 1/5 oder 1/8 oder 1/10 einer Gewindetiefe. Die Gewindetiefe entspricht der radialen Zahnhöhe von einem Gewindetal zu der Spitze des Zahns.

Vorzugsweise ist eine Gewindetiefe bei einem Koppelelement aus einem Faserverbundwerkstoff möglichst groß, um die Auflagefläche zu erhöhen.

Eine projizierte Fläche der Auflagefläche ist wichtig für die auftretende Druckbelastung. Wenn die Druckfestigkeit von einem Werkstoff einer Speicheneinheit kleiner ist als die benötigte Auflagefläche, die für die Druckfestigkeit benötigt wird, kann es zu einer Rissbildung und auch einem Kriechen kommen. Deshalb ist eine entsprechend Zahnhöhe vorteilhaft.

Vorzugsweise ist an einer radial mittleren Stelle eine axiale Länge eines Zahns des einen Verbindungselements erheblich größer als eine axiale Länge des anderen Verbindungselements (an der gleichen radial mittleren Stelle). Insbesondere ist eine axiale Länge eines Zahns des einen Verbindungselements an dem Flankendurchmesser des Gewindes erheblich größer als eine axiale Länge des anderen Verbindungselements an dem entsprechenden Flankendurchmesser. Unter dem Begriff Zahnbreite wird insbesondere eine Länge in axialer Richtung verstanden.

Vorzugsweise ist eine axiale Breite in einem radial mittleren Bereich der Zahnform des Speichengewindes größer als die axiale Breite der Zahnform des Speichennippelgewindes (an der gleichen radialen Stelle). Bei Koppelelementen oder Speichennippeln aus z.B. metallischen Werkstoffen und Speichen aus einem Faserverbundwerkstoff kann es auch umgekehrt sein.

Vorzugsweise unterscheiden sich die Festigkeiten der beiden Gewinde (insgesamt) um weniger als 50%, vorzugsweise um weniger als 30% oder 20% oder um weniger als 15%.

Besonders bevorzugt ergibt ein Produkt aus einem Verhältnis der Scherfestigkeit des Materials der Zähne des einen Verbindungselements zu der Scherfestigkeit des Materials der Zähne des anderen Verbindungselements multipliziert mit einem Verhältnis einer axialen Länge der Zähne des anderen Verbindungselements zu einer axialen Länge der Zähne des einen Verbindungselements an wenigstens einer radialen Stelle einen Wert zwischen 0,5 und 2,0 und vorzugsweise zwischen 2/3 und 3/2 und insbesondere einen Wert zwischen 3/4 und 4/3. Besonders bevorzugt liegt das Produkt bei einem Wert zwischen 0,75 und 1,25 oder zwischen 0,9 und 1,1. Dadurch werden nahezu gleiche Festigkeiten der miteinander zusammenwirkenden Gewinde und damit eine hohe (gesamte) Festigkeit der Gewindeverbindung.

Besonders bevorzugt ergibt ein Produkt aus einem Verhältnis des Kriechverhaltens des Materials der Zähne des einen Verbindungselements zu dem Kriechverhalten des Materials der Zähne des anderen Verbindungselements multipliziert mit einem Verhältnis einer axialen Länge der Zähne des anderen Verbindungselements zu einer axialen Länge der Zähne des einen Verbindungselements an wenigstens einer radialen Stelle einen Wert zwischen 2/3 und 3/2 und vorzugsweise zwischen 0,75 und 1,25.

Die Festigkeit repräsentiert vorzugsweise die Scherfestigkeit und das Kriechverhalten. Dann stellt die Festigkeit ein besonders gutes Maß für die Haltbarkeit dar.

Ein bevorzugtes Ziel ist es, dass die Festigkeiten und insbesondere die Schub- und Scherfestigkeiten beider Verbindungselemente nahezu gleich sind, um eine Schwäche eines schwächeren Werkstoffs ausgleichen zu können.

Insbesondere nimmt die radiale Eingriffstiefe der beiden Gewinde in dem montierten Zustand in axialer Richtung zur Speichenmitte hin zu. Das hat den Vorteil, dass eine gleichmäßigere Belastung der Windungen des Gewindes erfolgt. Eine größte Last nimmt nicht (unbedingt) der erste Gewindegang auf, da die Eingriffstiefe mit zunehmendem Abstand zunimmt. Dadurch können alle Teile des Gewindes eine optimale Last tragen. Das ist insbesondere bei Speichen aus Faserverbundwerkstoffen und besonders bevorzugt bei Speichen mit thermoplastischen Matrixmaterial sehr vorteilhaft. Oder bei Speichen aus Metall und Koppelelementen aus Faserverbundwerkstoffen.

In besonders bevorzugten Ausgestaltungen ist wenigstens ein Gewinde in axialer Richtung asymmetrisch ausgebildet. Insbesondere kann wenigstens ein Gewinde einer Gruppe von Gewinden entnommen sein, welche ein Sägengewinde, ein Rundgewinde und ein Trapezgewinde und dergleichen mehr umfasst. Unter den Begriffen Sägengewinde, Rundgewinde und Trapezgewinde werden auch Gewindearten verstanden, die ähnlich dazu ausgestaltet sind. Besonders bevorzugt sind beide Gewinde aufeinander abgestimmt. Das bedeutet, dass bei Einsatz z.B. eines Sägengewindes regelmäßig auch das andere Gewinde als eine Art von Sägengewinde ausgebildet ist oder die Form daran angelehnt ist.

Insbesondere bestehen die (beiden) Verbindungselemente zu einem erheblichen Anteil aus unterschiedlichen Werkstoffen.

In bevorzugten Ausgestaltungen umfasst das Koppelelement wenigstens einen metallischen Werkstoff oder besteht nahezu vollständig oder vollständig daraus.

Es ist bevorzugt, dass die Speiche wenigstens teilweise aus einem Faserverbundwerkstoff mit wenigstens einem Matrixmaterial und Verstärkungselementen besteht. Das Material des Gewindes der Speiche umfasst insbesondere wenigstens ein Matrixmaterial. Verstärkungselemente können in dem Matrixmaterial des Gewindes vorhanden sein. Es ist aber auch möglich, dass in dem Bereich des Gewindes keine Verstärkungselemente vorhanden sind.

In bevorzugten anderen Ausgestaltungen besteht die Speiche wenigstens teilweise aus einem metallischen Werkstoff und das Koppelelement besteht wenigstens teilweise aus einem thermoplastischen oder duroplastischen Material und insbesondere einem Faserverbundwerkstoff mit wenigstens einem Matrixmaterial und Verstärkungselementen.

Vorzugsweise sind die Endstücke einstückig mit dem Mittelstück ausgebildet sind und bilden jeweils ein Ende der Speiche. Wenigstens einige der Verstärkungselemente sind insbesondere als Langfasern ausgebildet sind und erstrecken sich in einem Querschnittsbereich vollständig durch das Mittelstück und jeweils über wenigstens einen wesentlichen Teil wenigstens eines oder vorzugsweise beider Endstücke. Oder die Langfasern erstrecken sich nahezu vollständig oder vollständig durch die Endstücke.

Langfasern können erheblich zur Stabilität beitragen, insbesondere, wenn sie sich (jeweils einstückig) von einem Ende bis zum anderen Ende der Speiche erstrecken. Langfasern sind in Sinne dieser Anmeldung durchgängige Fasern.

Wenn ein asymmetrisches Profil mit unterschiedlichen Flankenwinkeln vorliegt, können hohe Kräfte in axialer Richtung entlang des Speichensystems übertragen werden.

Insbesondere wird eine leichte und einfach zu fertigende Laufradkomponente zur Verfügung gestellt, die hoch belastbar ist.

Die einstückig mit dem Mittelstück ausgebildeten Endstücke ermöglichen eine hohe Belastbarkeit und verhindern Setzungserscheinungen, die bei mehrteiligen Speichen auftreten können. Das kann die Speichenspannung und die Zentrierung eines Laufrades negativ beeinflussen. Bei der Erfindung wird das verhindert.

Die Speiche kann im Wesentlichen durch Pultrusion hergestellt werden, wobei dann an das Mittelstück die Endstücke oder Teile davon angespritzt werden, während das Matrixmaterial des Mittelstücks noch flüssig ist oder nachdem es wieder teilflüssig oder flüssig gemacht wurde. Dadurch entsteht eine (insbesondere fugenlose und) einstückige Laufradkomponente, bei der auch im Inneren der Speiche keine Verklebungen, Klebeschichten oder trennenden Grenzschichten vorliegen. Es entsteht eine stoffschlüssige Verbindung. Es ist denkbar, dass mikroskopisch gesehen Grenzschichten oder doch eher Grenzbereiche erkennbar sind. Aber jedenfalls ist keine separate Zwischenschicht wie eine Klebeschicht vorhanden. Es ist in einem Schnitt eine Änderung von einem Material der Verstärkungselemente und/oder von der Größe und der Größenverteilung der Verstärkungselemente erkennbar. In einfachen Fällen, ändert sich das Fasermaterial und/oder die Faserdimension und in der Matrix ist vorzugsweise keine Grenzschicht und/oder kein Übergang erkennbar.

Die Speiche weist insbesondere einen gerade ausgebildeten und langgestreckten Speichenkörper auf, der ein Mittelstück und an dessen zwei gegenüberliegenden und voneinander entfernten Enden einstückig damit ausgebildete Endstücke umfasst sind. Die Speiche ist insbesondere gerade ausgebildet und weist keine Kröpfung auf. Speichen z.B. aus metallischen Werkstoffen können an einem Ende auch gekröpft ausgebildet sein.

Der Speichenkörper weist vorzugsweise keine Durchgangslöcher oder Vertiefungen auf, an denen andere Teile eingehakt werden können. Die Oberfläche der Verbindungselemente ist abgesehen von den Gewinden vorzugsweise glatt ausgebildet und verfügt über keine Haken und Ösen.

Als Langfasern werden in den Verbindungselementen lange Verstärkungsfasern und zum Beispiel Endlosfasern eingesetzt, die beispielsweise nach einer bzw. der Pultrusion entsprechend auf die Länge der Speiche abgeschnitten werden. Prägnant gesagt, können im Rahmen dieser Anmeldung lange Verstärkungsfasern auch Langfasern (oder "Endlosfasern") genannt werden. "Endlosfasern", weil sie bei der Herstellung endlos waren und/oder weil sie sich von einem Ende der Speiche zum anderen Ende der Speiche oder des Koppelelements erstrecken.

In einer bevorzugten Ausgestaltung weist wenigstens ein Endstück einen größeren Außendurchmesser auf als wenigstens eine Querabmessung in dem Mittelstück. Insbesondere ist wenigstens ein Außendurchmesser eines Endstücks größer als eine minimale Querabmessung und/oder eine mittlere Querabmessung und/oder eine maximale Querabmessung in dem Mittelstück.

Dabei wird unter einer Querabmessung eine quer bzw. senkrecht zur Längsachse oder Symmetrieachse der Speiche ausgerichtete Abmessung verstanden. In einfachen Ausgestaltungen kann die Querabmessung der Durchmesser in einem zentralen Bereich des Mittelstücks sein.

In einer bevorzugten Ausführungsform weist wenigstens ein Endstück und insbesondere wenigstens der Kopfabschnitt einen (unmittelbar oder auch mittelbar) an das Mittelstück der Speiche angrenzenden Verdickungsabschnitt und einen sich wiederum daran anschließenden Stützabschnitt auf. Der einstückig mit dem gesamten Speichenkörper gefertigte Verdickungsabschnitt sorgt zusammen mit dem Stützabschnitt für eine zuverlässige Abstützung der Speiche. In dem Verdickungsabschnitt erweitert sich wenigstens eine Abmessung der Speiche quer zur Längsrichtung der Speiche. In allen Ausgestaltungen kann der Verdickungsabschnitt konusartig ausgestaltet sein. Der Verdickungsabschnitt kann dann auch als Konusabschnitt bezeichnet werden.

Dieser Verdickungsabschnitt oder auch Konusabschnitt kann auch eine Funktion zum Halten der Speiche beim Laufradbau haben, sodass an der Speiche keine Schäden durch Verdrehung auftreten.

Vorzugsweise weist wenigstens eines der Endstücke einen Gewindeabschnitt (mit dem Gewinde) zur Verschraubung mit einem Speichennippel auf. Vorzugsweise weist wenigstens eines der Endstücke einen Kopfabschnitt zur Abstützung der Speiche auf. Es ist möglich und besonders bevorzugt, dass eines der Endstücke einen Kopfabschnitt zur Abstützung der Speiche und das andere Endstück einen Gewindeabschnitt zur Verschraubung mit einem Speichennippel umfasst. Möglich ist es aber auch, dass an beiden Enden Gewindeabschnitte ausgebildet sind.

Möglich ist es auch, dass an beiden Enden ein Kopfabschnitt mit einem daran ausgebildeten Gewindeabschnitt umfasst ist. Dann kann z.B. an beiden Ende eine Verdickung als Kopfabschnitt umfasst sein, wobei an dem Kopfabschnitt ein (z. B. zylindrischer) Gewindeabschnitt ausgebildet ist. Das ermöglicht eine flexible Verwendung.

In vorteilhaften Weiterbildungen umfasst wenigstens ein Endstück einen Querschnittsbereich mit darin eingebetteten Langfasern als Verstärkungselementen und wenigstens einen Querschnittsabschnitt mit darin eingebetteten kürzeren Verstärkungselementen oder ohne Verstärkungselemente. Dabei sind die kürzeren Verstärkungselemente kürzer ausgebildet als die längeren Verstärkungselemente bzw. Langfasern. Besonders bevorzugt sind die kürzeren Verstärkungselemente kürzer als 1/5 oder 1/10 der Länge der Langfasern. Die Länge der Langfasern entspricht insbesondere etwa bzw. im Wesentlichen der Speichenlänge bzw. der Länge eines Speichennippels und erreicht oder übersteigt wenigstens 90 % oder 95 % oder 99 % der Länge der Speiche bzw. des Speichennippels insgesamt. Bevorzugte Varianten von kürzeren Verstärkungselementen, die als Fasern ausgebildet sind, können im Rahmen dieser Anmeldung auch als Kurzfasern bezeichnet werden.

Es ist möglich, dass der Querschnittsabschnitt frei von Langfasern ausgebildet ist. Bevorzugt ist es, dass der Querschnittsabschnitt einen geringeren Anteil an Langfasern umfasst als der (mit Langfasern versehene) Querschnittsbereich. Besonders bevorzugt ist der Zentralbereich des Mittelstücks ein Querschnittsbereich mit (ausschließlich) Langfasern als Verstärkungselementen. Da die Langfasern im Prinzip durch die gesamte Speiche verlaufen, gibt es auch an den Enden (im radialen Zentrum oder darum herum) Langfasern.

Vorzugsweise wird wenigstens ein Teil der Verstärkungselemente durch Kurzfasern gebildet, die erheblich kürzer als die Langfasern ausgebildet sind.

Ein Querschnittsbereich kann auch als Langfaserbereich bezeichnet werden und ein Querschnittsabschnitt kann auch als Kurzfaserbereich bezeichnet werden. Unter Kurzfasern werden im Rahmen dieser Anmeldung insbesondere Verstärkungsfasern verstanden, die eine Länge zwischen 0,1 mm oder 0,2 mm und etwa 3 cm aufweisen. Besonders bevorzugt sind Kurzfasern kürzer als 10 mm.

Vorzugsweise weist ein erheblicher Teil des Querschnittsbereichs ausschließlich Langfasern als Verstärkungselementen auf.

Es ist in allen Ausgestaltungen auch möglich und bevorzugt, dass ein erheblicher Teil des Querschnittsabschnitts (oder der ganze Querschnittsabschnitt) keine Verstärkungselemente oder ausschließlich kürzere Verstärkungselemente (zum Beispiel in Form von Kurzfasern oder anderen Verstärkungselementen) aufweist.

In bevorzugten Ausgestaltungen wird wenigstens ein Teil der kürzeren Verstärkungselemente durch Faserschnipsel und/oder Verstärkungspartikel gebildet. Faserschnipsel sind insbesondere flächige Elemente. Verstärkungspartikel können Kugelelemente, Pulverpartikel oder auch unregelmäßige Partikel sein.

Es ist auch möglich, dass der Querschnittsabschnitt keine oder nur eine geringe Menge an Verstärkungselementen aufweist, sodass ein Gewichtsanteil an Verstärkungselementen in dem Querschnittsabschnitt viel geringer als ein Gewichtsanteil an Verstärkungselementen in dem Querschnittsbereich ist. Es kann eine geringere Menge an kürzeren Verstärkungselementen in dem Querschnittsbereich enthalten sein. Es kann auch sein, dass nahezu keine oder gar keine Verstärkungselemente in dem Querschnittsbereich vorhanden sind.

Vorzugsweise ist bei in axialer Richtung asymmetrischen Gewinden die flachere Gewindeflanke im montierten Zustand jeweils in Zugrichtung ausgerichtet und bildet eine tragende Flanke (bzw. die tragende Flanke des Gewindes). Insbesondere weist die flachere Gewindeflanke einen Winkel von weniger als 10° oder weniger als 8° senkrecht zur Längsrichtung auf. Die steilere Gewindeflanke weist insbesondere einen Winkel von größer als 20° oder 25° senkrecht zur Längsrichtung auf und bildet eine nichttragende Flanke. Insbesondere weist die steilere Gewindeflanke einen Winkel von kleiner als 60° oder 50° senkrecht zur Längsrichtung auf. Ein Flankenwinkel zwischen den Gewindeflanken beträgt vorzugsweise zwischen 25° und 60°.

Damit werden tragende und nichttragende Flanken bereitgestellt und es ergeben sich für den Flankenwinkel zwei verschiedene Werte, nämlich jeweils unterschiedliche Winkel zwischen der Gewindeflanke und einer senkrecht auf der axialen Richtung stehenden Linie. Der Flankenwinkel des Sägengewindes ergibt sich dann aus diesen beiden Werten. Beispielsweise kann eine Art von metrischen Sägengewinde eingesetzt werden, bei dem der Winkel an der tragenden Gewindeflanke 3° und der Winkel an der nichttragenden Gewindeflanke 30° beträgt. Der Flankenwinkel zwischen beiden Gewindeflanken beträgt dann (etwa) 33°. Das ist in Anlehnung an die DIN 513-1 bis DIN 513-3, wo aber größere Durchmesser von 10 mm bis 640 mm definiert werden und nicht so kleine Gewindeabmessungen, wie sie hier verwendet werden.

Möglich ist es auch, die Gewinde in Anlehnung an ein amerikanisches ANSI-Sägengewinde auszugestalten. Dann kann der Winkel an der nichttragenden Flanke 45° und an der tragenden Flanke 7° betragen. Abweichungen sind möglich.

Durch eine solche Konstruktion können gerade einseitige Belastungen gut abgeleitet werden. Das ist in Speichensystemen der Fall, die praktisch immer nur auf Zug belastet werden. Die tragende Gewindeflanke steht etwa senkrecht auf der axialen Richtung und kann damit in axialer Richtung die bei Speichensystemen recht hohen dynamischen Kräfte ableiten.

In allen Ausgestaltungen ist es besonders bevorzugt, dass ein maximaler Gewindedurchmesser eines Außengewindes (einer Speicheneinheit bzw. eines Verbindungselementes) kleiner als 8 mm und vorzugsweise kleiner 5 mm beträgt. Insbesondere ist ein minimaler Gewindedurchmesser eines Innengewindes größer 1 mm oder größer 1,5 mm oder größer 2 mm. Der maximale Gewindedurchmesser entspricht dabei insbesondere dem äußeren Gewindedurchmesser und der minimale Gewindedurchmesser eines Innengewindes dem lichten Innendurchmesser.

Besonders bevorzugt beträgt eine Gewindesteigung (eines Innen- und eines Außengewindes) zwischen 0,3 mm und 0,9 mm.

Ein Durchmesserunterschied von einem maximalen Gewindedurchmesser zu einem minimalen Gewindedurchmesser (desselben Gewindes) beträgt vorzugsweise zwischen 0,5 mm und 1,5 mm.

In allen Ausgestaltungen ist es möglich und auch bevorzugt, dass der Speichennippel wenigstens teilweise aus (wenigstens) einem Metall besteht. Der Speichennippel als Verbindungselement kann auch überwiegend oder nahezu vollständig oder vollständig aus Metall bestehen, beispielsweise aus einem Leichtmetall.

In besonders bevorzugten Ausgestaltungen umfasst der Querschnittsabschnitt eines Verbindungselements aus Faserverbundwerkstoff das gleiche Matrixmaterial wie der Querschnittsbereich. Das bedeutet insbesondere, dass in dem Kurzfaserbereich und in dem Langfaserbereich das gleiche oder sogar dasselbe Matrixmaterial eingesetzt wird. Das bedeutet dann, dass das Matrixmaterial der Speiche insgesamt vorzugsweise einheitlich ist.

So kann in der ganzen Speiche und dem ganzen Speichennippel das gleiche Matrixmaterial bzw. der gleiche Materialtyp des Matrixmaterials eingesetzt werden. Bevorzugt wird wenigstens ein artgleiches Matrixmaterial eingesetzt, welches eine stoffschlüssige Verbindung eingeht. Eine Grenzschicht ist besonders bevorzugt auch in einem Schliffbild nicht erkennbar. Gegebenenfalls ist es auch möglich, dass leicht unterschiedliche Matrixmaterialien verwendet werden. Es ist besonders bevorzugt, dass die Grundbestandteile des Matrixmaterials identisch sind.

Es ist besonders bevorzugt, dass das Material der Verstärkungselemente der Speiche und/oder des Speichennippels insgesamt einheitlich ist. Dabei ist es aber möglich und bevorzugt, dass sich das Material der Verstärkungselemente in dem Querschnittsabschnitt von dem Material der Verstärkungselemente in dem Querschnittsbereich wenigstens teilweise unterscheidet. Dabei bestehen die Unterschiede dann nicht nur in Form und Größe, sondern auch in der Art und Zusammensetzung des verwendeten Materials. Dabei kann insbesondere wenigstens ein Teil der kürzeren Verstärkungselemente aus einem anderen Material als die Langfasern bestehen. So können beispielsweise Kohle- oder Carbonfasern für die Langfasern eingesetzt werden, während Glasfasern als Kurzfasern oder Glaspartikel zum Beispiel in dem Bereich eines Gewindes eingesetzt werden. Bevorzugt umfasst wenigstens ein Teil der kürzeren Verstärkungselemente Glasfasermaterial.

In besonders bevorzugten Ausgestaltungen ist die Speiche und/oder der Speichennippel werkstoffeinstückig ausgebildet. Besonders bevorzugt finden sich in dem Volumen des Speichenkörpers keine konkreten Materialgrenzflächen, wie sie zum Beispiel beim Verkleben oder auch beim Verschweißen von zwei separaten Werkstücken auftreten.

Vorzugsweise weist der Querschnittsbereich (Langfaserbereich) in wenigstens einem Endabschnitt einen von einem rotationssymmetrischen Querschnitt abweichenden Querschnitt auf. So ist es bevorzugt, dass eine Umhüllende der Langfasern in dem Querschnittsbereich einen von einem rotationssymmetrischen Querschnitt abweichenden Querschnitt aufweist. Dabei wird unter einer "Umhüllenden" eine "Hüllkurve" oder eine (virtuelle) Form verstanden. Eine "Hüllkurve" umschließt den Querschnittsbereich, der die Verstärkungselemente bzw. Langfasern enthält. Die dreidimensionale Form des Querschnittsbereichs wird durch die Lage der Verstärkungselemente bzw. Langfasern insgesamt definiert. Die "Hüllkurve" umschließt die Verstärkungselemente möglichst eng. Die Hüllkurve verdeutlicht nur die Struktur, ist aber keine reale Schicht.

In allen Weiterbildungen und Ausgestaltungen ist es bevorzugt, dass der abweichende Querschnitt eine Form aufweist, welche aus einer Gruppe von Formen entnommen ist, welche (näherungsweise) eine mehreckige, sternförmige, ovale, elliptische oder kegel- oder T- oder L- oder H-förmige Form umfasst, wobei die Ecken abgerundet sein können. Durch solche Ausgestaltungen wird die Übertragung eines höheren Drehmoments zuverlässig gewährleistet, welches gegebenenfalls beim Befestigen oder Justieren der Speiche auftritt.

Besonders bevorzugt bleibt eine Gesamtfläche des Querschnittbereichs gleich, wobei sich die Form beim Übergang zu dem abweichenden Querschnitt ändert.

Dazu wird das Mittelstück (wenigstens) an seinen Enden aufgeheizt und in bevorzugten Ausgestaltungen wird wenigstens ein Ende umgeformt. Das Ende des Mittelstücks wird dann z.B. von einem aerodynamischen Querschnitt in einen runden, eckigen, sternförmigen oder auch ovalen Querschnitt oder dergleichen umgeformt, um einen stärken Halt der Speiche zu ermöglichen.

Dabei werden die in dem Querschnittbereich enthaltenen Langfasern auch in die neue abweichende Querschnittsform gedrückt bzw. verbracht. Um diese (gegebenenfalls komplexe) geometrische Form wird dann das Endstück einstückig angeformt.

Dabei kann eine Umhüllende der Langfasern in dem Mittelstück eine erste Form aufweisen. In einfachen Fällen eine runde Querschnittsform. In anderen bevorzugten Fällen z.B. eine aerodynamische und z.B. etwa ovale Querschnittsform, die den Querschnittsbereich in dem Mittelstück bildet.

In dem fertigen Endstück kann eine Umhüllende der Langfasern (der Querschnittsbereich mit einem abweichenden Querschnitt) eine zweite Form aufweisen, die von der ersten Form erheblich abweicht. Z.B. kann die zweite Form in einem Querschnitt an dem Endstück eine größte Längserstreckung aufweisen, die quer oder senkrecht zu einer größten Längserstreckung in einem Querschnitt an dem Mittelstück ausgerichtet ist.

Dabei bleibt eine Querschnittsfläche der Umhüllenden in beiden Querschnitten insbesondere (nahezu) gleich. Das Volumen des Querschnittsbereichs wird an dem Endstück umgeformt. Anders gesagt, verbleibt eine Querschnittsfläche der Langfasern in dem Endstück gleich groß wie in dem Mittelstück, aber die Form einer Umhüllenden bzw. die äußere Form des Querschnittsbereichs ändert sich in dem Endstück.

Liegt z.B. eine ovale oder auch runde Fläche des Querschnittsbereichs in dem Mittelstück vor und wird diese an dem Endstück umgeformt und oval und quer dazu ausgerichtet, steigert das die axiale Belastbarkeit der Speiche.

Es kann sich von dem Mittelstück in das Endstück hinein ein Querschnittsverlauf bei gleichbleibender Querschnittsfläche von einer horizontalen Ellipse zu einer vertikalen Eklipse ändern, wodurch die Zugfestigkeit des Speichenkörpers verbessert wird.

Generell werden bei der Montage von Speichensystemen in einem Laufrad die Speichen unter eine derartige Zugspannung gesetzt, dass im regelmäßigen Betrieb bei allen auftretenden Belastungen immer eine erhebliche Zugspannung innerhalb der Speiche vorliegt.

In einer Ausgestaltung ist vorzugsweise der Querschnittsabschnitt zentrisch in dem Endstück aufgenommen und weist einen konusähnlichen Abschnitt auf. Dann ist es möglich, dass in dem Endstück Langfasern den konusähnlichen Abschnitt ringsum umgeben.

Vorzugsweise umgibt der Querschnittsabschnitt den Querschnittsbereich (Langfaserbereich) radial und der Querschnittsabschnitt bildet eine Verdickung an dem Endstück.

Besonders bevorzugt ist an dem Querschnittsabschnitt (mit kürzeren Verstärkungselementen) der Gewindeabschnitt ausgebildet.

Besonders bevorzugt erstrecken sich die Langfasern durch einen Zentralbereich des Mittelabschnitts und wenigstens einen Zentralbereich eines Endstücks. Das Endstück kann mit dem Gewindeabschnitt einen Zentralbereich umfassen, durch den sich die Langfasern erstrecken und einen Ringbereich, in dem das Gewinde angeformt ist und in dem kürzere Verstärkungselemente (oder gegebenenfalls gar keine Verstärkungselemente) eingebracht sind.

Vorzugsweise wird in dem Querschnittsbereich ein insbesondere durch thermische Einwirkung reversibel umformbares Matrixmaterial eingesetzt. Besonders bevorzugt ist in dem Speichenkörper insgesamt ein reversibel umformbares Matrixmaterial umfasst.

In allen Ausgestaltungen ist es besonders bevorzugt, dass in dem Querschnittsbereich ein thermoplastisches Matrixmaterial umfasst ist. Besonders bevorzugt ist in dem Speichenkörper insgesamt ein thermoplastisches Matrixmaterial umfasst. Besonders bevorzugt wird (nur) wenigstens ein thermoplastisches Matrixmaterial als Matrixmaterial in dem Speichenkörper verwendet.

In bevorzugten Ausgestaltungen umfasst eine Laufradkomponente weiterhin eine Felge und eine Nabe, die über mehrere separate Speichensysteme (lösbar) miteinander verbunden sind.

Die Speichennippel können aus einem Faserverbundmaterial oder wenigstens teilweise oder auch vollständig aus einem Metall bestehen oder gefertigt sein. Ein Speichennippel ist vorzugsweise auch aus wenigstens einem Faserverbundwerkstoff gefertigt und umfasst insbesondere wenigstens ein Matrixmaterial und darin eingebettete Verstärkungselemente. Bei der Speiche sind die Endstücke insbesondere einstückig mit dem Mittelstück ausgebildet und bilden jeweils ein Ende der Speiche.

Vorzugsweise ist das Mittelstück der Speiche nach spezifischem Einsatzgebiet geformt. In bevorzugten Ausgestaltungen ist das Mittelstück der Speiche aerodynamisch geformt. Das ermöglicht einen geringeren Luftwiderstand bei geringem Gewicht. Vorzugsweise ist das Endstück in der Speiche wenigstens nahezu vollständig oder vollständig innerhalb der Felge aufgenommen. Das ermöglicht eine besonders vorteilhafte Ausgestaltung, bei der das aerodynamische Mittelstück sich bis an die Felge heran erstreckt. Ein Übergangsbereich ist dann nicht nötig. Da gerade im radial äußersten Bereich der Speiche an der Felge die größten Relativgeschwindigkeiten zur Umgebung auftreten, ist eine aerodynamische Ausgestaltung dort besonders vorteilhaft. Das wird durch die Erfindung ermöglicht.

Vorzugsweise wird wenigstens ein Speichennippel aus Faserverbundwerkstoff eingesetzt und mit der Speiche verschraubt. Besonders bevorzugt sind alle Speichen und alle Speichennippel aus Faserverbundwerkstoff gefertigt.

Besonders bevorzugt umfasst das Material der Felge und auch das Material des Gehäuses der Nabe Faserverbundwerkstoff und/oder Metall.

Eine weitere erfindungsgemäße Laufradkomponente für ein Fahrzeug und insbesondere für Fahrräder umfasst ein Verbindungselement eines Speichensystems, nämlich ein Koppelelement. Das Koppelelement kann insbesondere als Speichennippel ausgebildet sein. Das Koppelelement ist zur Verbindung mit einem als Speiche ausgebildeten Verbindungselement geeignet bzw. damit verbindbar. Das Koppelelement weist ein Gewinde auf. Über das Gewinde ist das Koppelelement mit einer Speiche verbindbar. Das Gewinde ist als Innengewinde ausgebildet, um ein Außengewinde einer Speiche mit dem Innengewinde des Koppelelements miteinander zu verbinden. Dabei nimmt ein freier Innendurchmesser des Innengewindes des Koppelelements über wenigstens einen (erheblichen) Teil (einer axialen Gewindelänge des Gewindes) zu. Der Innendurchmesser des Innengewindes kann z.B. einen konischen Verlauf aufweisen. Dadurch kann die Festigkeit der Verbindung des Speichensystems erhöht werden. Diese Laufradkomponente ist insbesondere Teil einer zuvor beschriebenen Laufradkomponente.

Weitere Vorteile ergeben sich aus den Ausführungsbeispielen, die im Folgenden mit Bezug auf die beiliegenden Figuren erläutert werden.

In den Figuren zeigen:
- Fig. 1: eine schematische Darstellung eines Rennrades;
- Fig. 2: eine schematische Darstellung eines Mountainbikes;
- Fig. 3a-3c: schematische Darstellungen von Speichen als Verbindungselementen von anmeldungsgemäßen Speichensystemen;
- Fig. 4a-4d: schematische Schnittansichten von Speichen anmeldungsgemäßer Speichensysteme;
- Fig. 5a-7a: schematische Darstellungen von Speichennippeln als Verbindungselementen von anmeldungsgemäßen Speichensystemen; und
- Fig. 8a-11a: schematische Darstellungen von Speichen von anmeldungsgemäßen Speichensystemen im montierten Zustand.

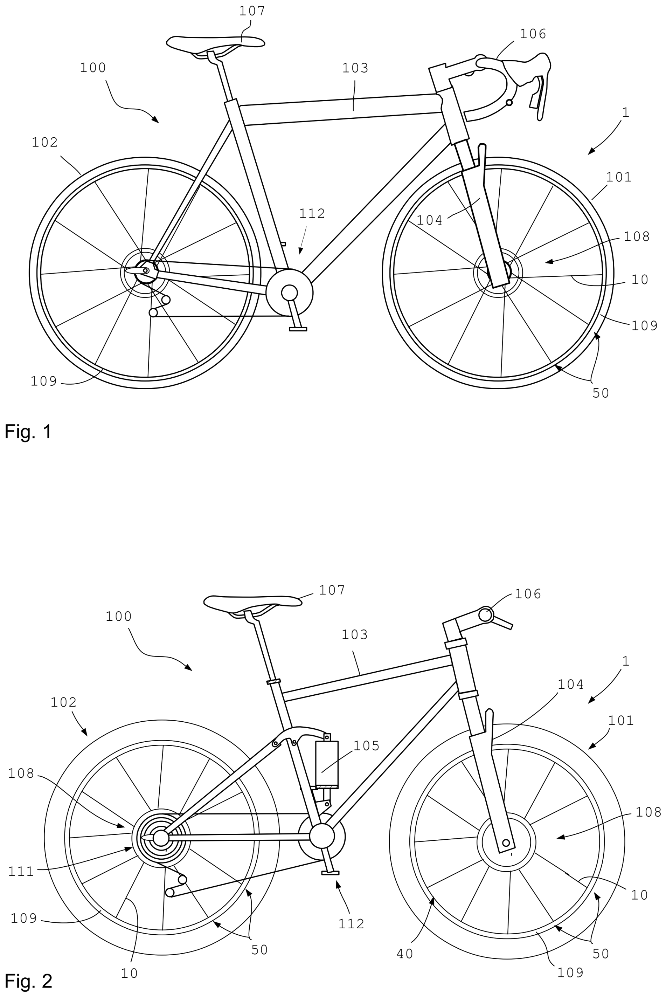

In den Figuren 1 und 2 sind jeweils ein Mountainbike bzw. ein Gravel-Fahrrad oder Rennrad 100 dargestellt, die jeweils mit erfindungsgemäßen Laufradkomponenten 1 mit Speichensystemen 40 ausgerüstet sind. Das Mountainbike bzw. Rennrad 100 verfügt jeweils über ein Vorderrad 101 und ein Hinterrad 102.

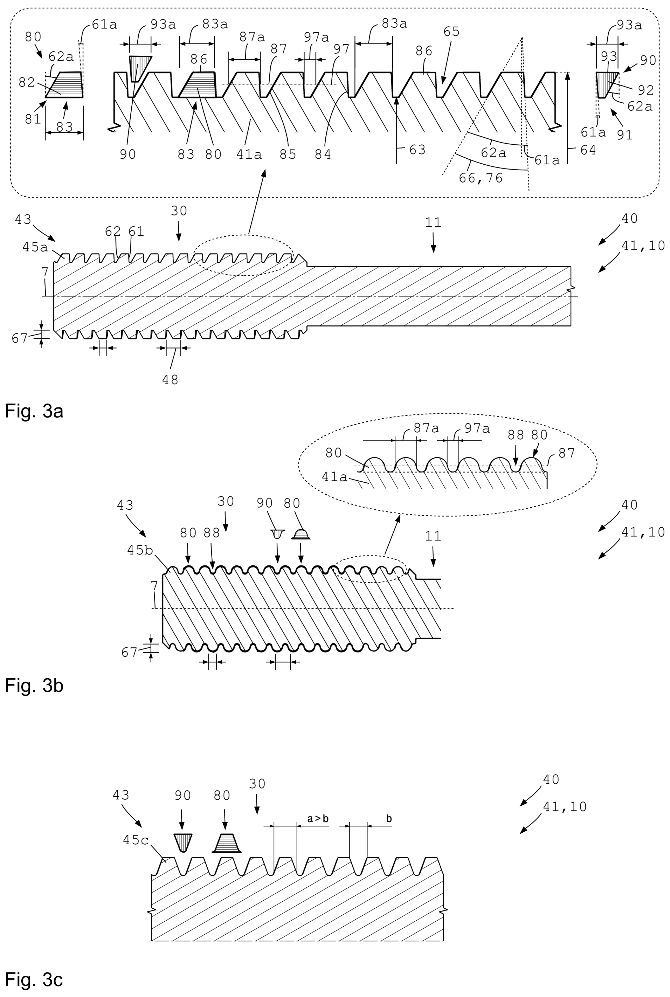

Die beiden Räder 101, 102 verfügen über Speichen 10 als Verbindungselementen 41, die mit Speichennippeln 50 als Verbindungselementen 42 zusammenwirken (vgl. Fig. 3a-7a). Eine Ritzeleinrichtung 111 ist vorgesehen. Grundsätzlich können konventionelle Felgenbremsen oder auch andere Bremsen wie zum Beispiel Scheibenbremsen vorgesehen sein.

Die Fahrräder 100 verfügen jeweils über einen Rahmen 103, einen Lenker 106, einen Sattel 107, eine Gabel bzw. eine Federgabel 104 und im Falle des Mountainbikes oder einem Rennrad oder Gravel-Fahrrad (Gravelbike) kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

In den Figuren 1 und 2 sind anmeldungsgemäße Laufradkomponenten 1 mit Speichen 10 und Speichennippeln 50a zu erkennen. Die Speichen verbinden die Nabe 108 mit der Felge 109. Hier sind die Speichennippel 50a im Innenraum der Hohlkammerfelge 109 aufgenommen, sodass sie in der Seitenansicht nicht sichtbar sind.

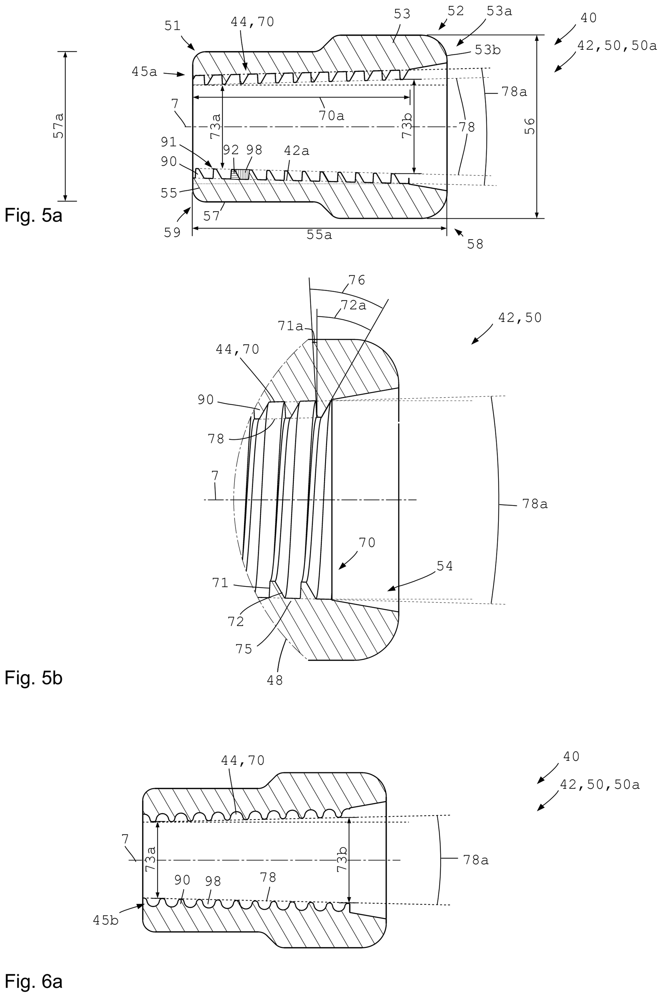

In den Figuren 3a bis 11a sind unterschiedliche anmeldungsgemäße Laufradkomponenten 1 abgebildet. Eine Laufradkomponente 1 verfügt über Speichensysteme 40 mit Speichen 10 und Koppelelementen 50 in Form von z.B. Speichennippeln 50a (vgl. z.B. Fig. 5a).

In Figuren 3a, 3b und 3c ist jeweils eine Draufsicht auf eine Speiche 10 eines Speichensystems 40 dargestellt. Die Speiche 10 verfügt über ein Mittelstück 11 und erstreckt sich gerade in axialer Richtung 7. Das hier sichtbare Endstück 30 verfügt jeweils über ein Außengewinde 60 als Gewinde 43. Der Endabschnitt weist hier einen größeren Außendurchmesser als das Mittelstück 11 auf.

Oberhalb von Fig. 3a und 3b ist jeweils ein vergrößertes Detail des Gewindes 43 bzw. Außengewindes 60 abgebildet. Die Speiche 10 als Speicheneinheit bzw. Verbindungselement 41 verfügt über einen Grundkörper 41a mit einem davon radial nach außen abstehendem Außengewinde 60. In dem dargestellten Querschnitt stehen die Zähne 80 von dem Grundkörper 41a zwischen zwei Gewindetälern 65 ab. Die Zähne 80 sind im Wesentlichen gleich ausgebildet und verfügen über eine Basis 83 an dem Kerndurchmesser 63. Der Zahn 80 erstreckt sich mit seinen Zahnflanken 84 und 85 radial nach außen. Die Spitze 86 des Zahns 80 bildet das radial äußere Ende.

Die Zahnform 81 und deren Querschnitt 82 unterscheidet sich in den Figuren 3a bis 3c. In Fig. 3a ist eine Art von Sägegewinde 45a dargestellt, bei der eine Gewindeflanke 61 unter einem flachen Winkel 61a und die andere Gewindeflanke 62 unter einem größeren Winkel ausgerichtet ist. In Fig. 3b ist eine Art von Rundgewinde 45b und in Fig. 3c eine Art von Trapezgewinde 45c abgebildet. Eingezeichnet sind die Gewindetiefe 67 und die Gewindesteigung 48.

In den Figuren 3a bis 3c ist jeweils ein Zahn 80 schraffiert hinterlegt, um den Querschnitt 82 der jeweiligen Zahnform 80 zu verdeutlichen. Weiterhin ist ein in das Außengewinde 60 eingreifender geschnittener Zahn 90 eines in den Figuren 3a bis 3c ansonsten nicht dargestellten Speichennippels 50a (vgl. z.B. Fig. 5a) zur Verdeutlichung abgebildet. Die Zahnzwischenräume 88 werden durch den Eingriff eines Zahns 90 bzw. das Gewinde weitestgehend (und im Wesentlichen vollständig) ausgefüllt. Der Zahn 90 erstreckt sich von seiner Basis 93 an dem Grundkörper 42a (vgl. Fig. 5a) in den Zahnzwischenraum 88 zwischen zwei Zähnen 80 hinein. Die Winkel der Gewindeflanken entsprechen den Winkeln 61a, 62a.

Die Zähne 80 des Gewindes 43 der Speiche 10 erstrecken sich von dem Kerndurchmesser 63 bis zum Außendurchmesser 64 radial nach außen. In einem radial mittleren Bereich der Zähne (insbesondere am Flankendurchmesser) erstrecken sich die Zähne 80 der Speiche 10 über eine erheblich größere axiale Distanz 87a als die axiale Länge 97a der Zähne 90 der Innenverzahnung 70. Dadurch können Materialunterschiede ausgeglichen werden, sodass eine nahezu gleiche Festigkeit der beiden Verbindungselemente 41, 42 realisiert werden kann.

In Figur 3b weisen die Zähne 80 des Außengewindes 60 der Speiche 10 eine außen runde Form und auch eine größere axiale Länge an der Basis auf. Das gilt auch für die Ausführungsform nach Fig. 3c, bei der die Zähne 90 eine Art von Trapezform aufweisen.

Durch die unterschiedlichen Querschnitte 82, 92 der Zähne 80, 90 können Materialunterschiede und gegebenenfalls Strukturunterschiede ausgeglichen werden.

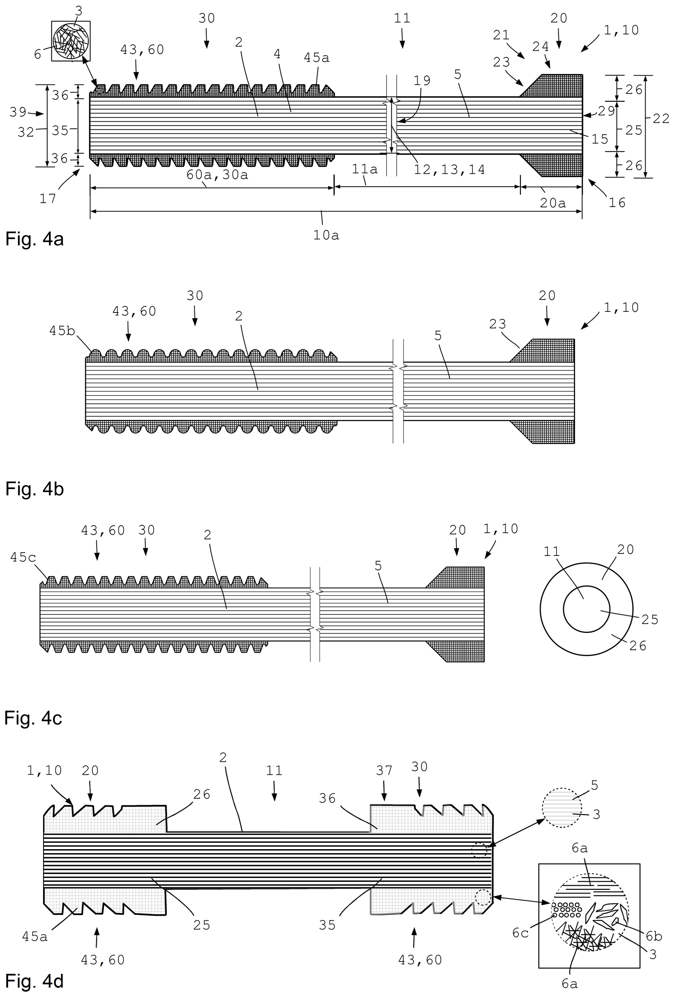

In den Figuren 4a bis 4c sind entsprechend vollständige schematische Querschnitte von Speichen 10 als Verbindungselementen 41 von Speichensystemen 40 abgebildet. Fig. 4a zeigt eine Speiche 10 mit einer Art von Sägengewinde 45a, Fig. 4b eine Speiche 10 mit einer Art von Rundgewinde 45b und Fig. 4c eine Speiche 10 mit einer Art von Trapezgewinde 45c.

Die Speiche 10 weist in den Fig. 4a bis 4c jeweils ein Endstück 20 ohne Gewinde mit einem Kopfabschnitt 21 auf, der als Verdickungsabschnitt 23 z.B. konisch ausgebildet sein kann und an den sich ein Stützabschnitt 24 anschließen kann. Das andere Endstück 30 weist dann jeweils über einer Länge 60a ein Außengewinde 60 als Gewinde 43 auf. Es ist auch möglich, dass beide Endstücke jeweils ein Gewinde aufweisen. Hier ist jeweils erkennbar, dass sich der Zentralbereich 19 jeweils vollständig durch die Speiche 10 mit der Länge 10a erstreckt. In dem Endstück 20 kann der Zentralbereich 19 als Zentralbereich 29 bezeichnet werden. In dem Endstück 30 kann der Zentralbereich 19 als Zentralbereich 39 bezeichnet werden.

In den Zentralbereichen 19, 29, 39 sind in dem Matrixmaterial 3 Langfasern 5 als Verstärkungselemente 4 in dem Faserverbundwerkstoff 2 aufgenommen. Die Langfasern 5 erstrecken sich einstückig (und "endlos") von einem Ende der Speiche 10 zum anderen Ende.

An dem Endstück 20, 30 wird der Zentralbereich 29, 39 radial umgeben von einem Querschnittsabschnitt 26, 36. Der Zentralbereich 29, 39 bildet einen Querschnittsbereich 25, 35, den Langfaserbereich. Darum herum sind in dem Querschnittsabschnitt 26, 36 nur wenige oder vorzugsweise gar keine Langfasern 5 enthalten. In dem Querschnittsabschnitt 26, 36 können gar keine Verstärkungselemente 4 vorgesehen sein, sondern nur reines Matrixmaterial 3. Möglich und bevorzugt ist es auch, dass in dem Querschnittsabschnitt 26, 36 kürzere Verstärkungselemente 6 enthalten sind. Die kürzeren Verstärkungselemente 6 können als Kurzfasern 6a ausgebildet sein, wie in Fig. 4a oben links zu erkennen ist. Möglich ist es auch, dass in einem Querschnittsabschnitt 26, 36 Kurzfasern 6a und/oder Faserschnipsel 6b und/oder Verstärkungspartikel 6c enthalten sind, wie Fig. 4d im rechten Teil vergrößert anschaulich zeigt. Insgesamt ergibt sich bei dem Speichenkörper 15 der Speiche 10 ein Außendurchmesser 22 an dem Endstück 20 an dem Ende 16 und ein Außendurchmesser 32 an dem Ende 17 an dem Endstück 30.

In einfachen Ausgestaltungen ist das Mittelstück 11 wenigstens in dem Zentralbereich 19 rund ausgebildet, sodass die minimale Querabmessung 12, die mittlere Querabmessung 13 und die maximale Querabmessung 14 jeweils einen gleichen Wert aufweisen und hier dem Durchmesser des Mittelstücks 11 entsprechen. In anderen Ausgestaltungen kann die Speiche 11 z.B. aerodynamisch ausgebildet sein, sodass sich die minimale, mittlere und maximale Querabmessung 12-14 jeweils voneinander unterscheidet.

In den Figuren 5a bis 7a sind verschiedene Ausführungsformen von Speichennippeln 50a als Koppelelementen 50 abgebildet, die jeweils ein Verbindungselement 42 eines Speichensystems 40 bilden.

Figur 5a bis 7a zeigen schematische Querschnitte durch einen Speichennippel 50a als Verbindungselement 42 des Speichensystems 40 in einem Querschnitt, wobei das Innengewinde 70 als Gewinde 44 im Inneren und der verdickte Endbereich am rechten Endabschnitt 52 zu erkennen ist, mit dem sich der Speichennippel 50 im Inneren einer Felge abstützt. Hier stützt sich der Nippel mit dem verdickten Endbereich 53 am rechten Ende 52 ab.

In Fig. 5a verfügt der Speichennippel 50a über einen Nippelkörper 55, der sich über eine Länge 55a erstreckt, die zum Beispiel 10 mm betragen kann. Möglich sind auch etwas kürzere und auch etwas längere Ausgestaltungen. Der Nippelkörper 55 weist eine größere Länge 55a als ein Durchmesser 56 des Nippelkörpers auf.

Der Nippelkörper verfügt über Endabschnitte 51 und 52 an den Enden 58 und 59. An dem Ende 58 ist in Fig. 5a der Nippelkopf 53 mit dem Kopfende 53a ausgebildet, der abgerundet ausgebildet ist und die Anlagefläche 53b zur Verfügung stellt, an der sich der Nippel zum Beispiel an der Felge abstützt.

An dem Nippelkopf 53 ist eine Aufnahme 54 (Einführhilfe) für das Gewindeende einer Speiche ausgebildet. In der Aufnahme ist ein Innengewinde 70 ausgebildet. Über das Gewinde 44 kann der Nippelkopf 53 auf ein Speichenende aufgeschraubt werden. Die Aufnahme 54 kann als Durchgangsöffnung ausgebildet sein. Es ist auch möglich, dass das andere Ende 51 teilweise oder ganz verschlossen ist. Dann ist die Aufnahme 54 ein Sackloch.

In Fig. 5a ist ein Speichennippel 50a abgebildet, der eine Art von Sägengewinde 45a als Innengewinde 70 aufweist. Das Innengewinde 70 ist in radialer Richtung asymmetrisch ausgebildet. Die Querschnitte der Zähne 90 des Speichennippels 50a weisen eine andere Zahnform 91 und einen anderen Querschnitt 92 auf als die damit zusammenwirkenden Zähne 80 der Speiche 10. Die Zähne 80, 90 unterscheiden sich in Hinsicht der Abmessungen und auch der Zahnform. Zusammen füllen die Zähne 80 und 90 jedenfalls den Zwischenraum zwischen Speiche 10 und Speichennippel 50a weitestgehend aus.

Das Innengewinde 70 ist konisch ausgebildet und weist einen Öffnungswinkel 78a auf, der hier etwa 3° beträgt, aber auch größer oder kleiner sein kann. Das damit zusammenwirkende Außengewinde 60 einer Speiche 10 ist z.B. zylindrisch ausgebildet und kann einen zylindrischen Kerndurchmesser 63 und einen zylindrischen Außendurchmesser 64 aufweisen (vgl. z.B. Fig. 4a). Möglich ist es auch, dass ein Außengewinde einer Speiche 10 leicht konisch ausgebildet ist.

Die Innenkontur 78 des Speichennippels 50a ist ebenfalls konisch oder trompetenartig ausgebildet. Die Gestalt ergibt sich aus dem Öffnungswinkel 78a. Der Öffnungswinkel 78a kann über der Länge des Speichennippels 50a variieren und kann z.B. zu einem axialen Ende hin größer werden. Dann ist die Innenkontur 78 nicht exakt konisch, sondern eher trompetenartig ausgebildet. Die Innenkontur 78 weitet sich zunehmend auf. Die Innenkontur verbindet die Punkte oder Kanten, die radial am Weitesten nach innen ragen. Im Regelfall damit die Spitzen 96 der Zähne 90 bzw. die radial inneren Konturen des Gewindes 70.

Das Innengewinde 70 erstreckt sich über eine Gewindelänge 70a. Am hier rechten Endabschnitt 52 ist ein verdickter Nippelkopf 53 ausgebildet, der abgerundet ausgebildet ist, um sich an einer Felge abzustützen. Das Koppelelement 50 und hier der Speichennippel 50a weist ein Kopfende 53a mit einer Anlagefläche 53b zur Abstützung an einer Felge auf. Eine radiale Eingriffstiefe 49 nimmt im montierten Zustand in Richtung auf das Kopfende 53a hin ab.

Ein Zahn 90 ist schraffiert hervorgehoben. Daneben ist ein Zahnzwischenraum 98 eingezeichnet, der einen anderen Querschnitt und andere Abmessungen aufweist. Ein lichter Innendurchmesser 73a an dem hier linken Ende 51 ist kleiner als der freie Innendurchmesser 73b an dem anderen Ende des Gewindes 70. Dadurch variiert bei einer eingeschraubten Speiche 10 mit einem zylindrischen Außengewinde eine radiale Eingriffstiefe 49 über der Länge des Speichennippels 50a.

Fig. 5b zeigt eine vergrößerte Darstellung des Endabschnitts 52 aus Fig. 5a in einem Vollschnitt. Gut erkennbar sind die asymmetrischen Winkel 71a, 72a der Zahnflanken bzw. der Gewindeflanken 71, 72. Der Flankenwinkel 76 (bzw. 66) setzt sich aus den Winkeln 71a und 72a (61a, 62a) zusammen. Zwischen zwei Zähnen 90 ist ein Gewindetal 75 zu sehen.

Fig. 6a zeigt einen Speichennippel 50a, der im Unterschied zum Ausführungsbeispiel nach Fig. 5a eine Art von Rundgewinde aufweist. Das Innengewinde 70 ist konisch ausgebildet und in der Richtung der einzuschraubenden Speiche geöffnet. Der Öffnungswinkel 78a ist eingezeichnet. Auch hier ergibt sich eine über der Eingriffslänge variable radiale Eingriffstiefe.

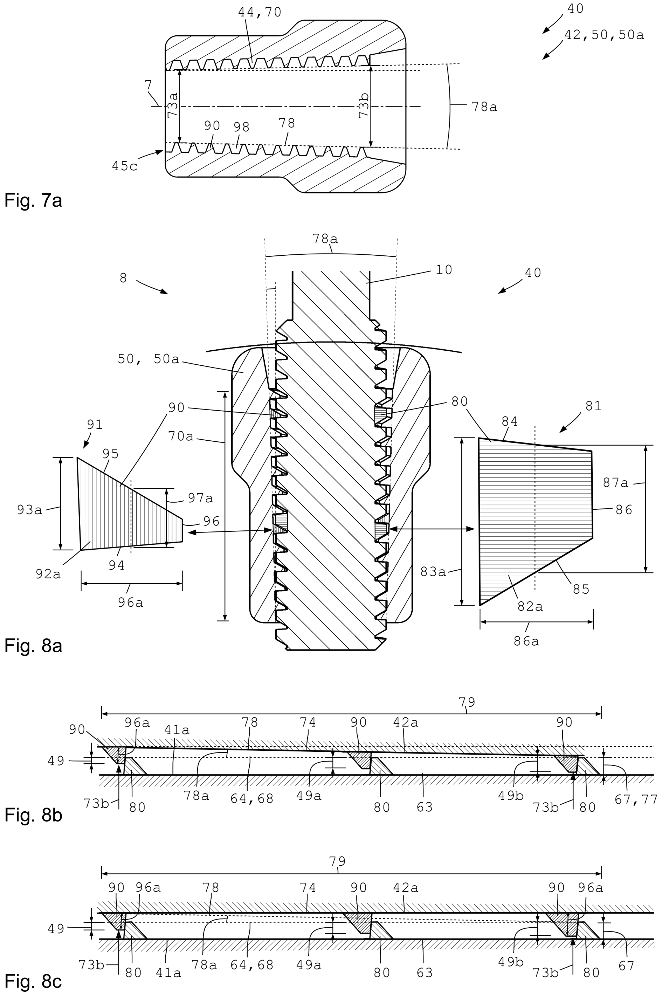

Fig. 7a stellt einen Speichennippel 50a dar, der eine Art von Trapezgewinde aufweist. Das Innengewinde 70 ist konisch ausgebildet und in der Richtung der einzuschraubenden Speiche geöffnet. Der Öffnungswinkel 78a einer Innenkontur 78 ist eingezeichnet.

In den Fig. 8a bis 10b sind anmeldungsgemäße Varianten von Speichensystemen 40 im montierten Zustand 8 dargestellt.

Fig. 8a zeigt den Zusammenbau des Speichennippels 50a aus Fig. 5a mit einer Speiche 10 aus Fig. 3a mit einem konischen Innengewinde 70. Die Gewinde 43, 44 sind als radial asymmetrische Sägengewinde ausgebildet. Links bzw. rechts neben der Schnittdarstellung sind vergrößert Querschnitte 82, 92 der Zähne 80, 90 abgebildet. Die Zähne 80, 90 erstrecken sich jeweils von einer Basis 83, 93 aus radial nach außen bzw. innen. Die Zahnflanken 84, 85 bzw. 94, 95 verlaufen unter unterschiedlichen Winkeln zur Spitze 86, 96. Die Zahnhöhe 86a, 96a ist jeweils gleich. Die Querschnittsflächen 82a, 92a der Querschnitte 82, 92 unterscheiden sich erheblich. So weist der Zahn 80 des Außengewindes 60 ein viel größere axiale Länge 83a an der Basis 83 als der Zahn 90 auf. Die axiale Länge 93a an der Basis 93 ist hier nur knapp halb so lang. Dadurch kann die Festigkeit erheblich an das eingesetzte Material angepasst werden. Auch die axiale Länge 87a in einem radial mittleren Bereich (der Zahnhöhe 86a bzw. 96a) ist deutlich größer als die entsprechende axiale Länge 97a der Zähne 90.

Figuren 8b und 8c zeigen schematische Ansichten des Eingriffs der Zähne 80, 90 ineinander, wobei das Innengewinde 70 einen Öffnungswinkel 78a aufweist. In Fig. 8b ist das Innengewinde konisch ausgebildet. Die Zähne 90 weisen jeweils eine identische Zahnhöhe auf. Eine Gewindetiefe 67, 77 ist hier konstant und hier auch gleich. Aufgrund der Konizität ergibt sich eine variable radiale Eingriffstiefe 49, die sich hier etwa linear von dem geringen Überlapp mit der radialen Eingriffstiefe 49 über die mittlere radiale Eingriffstiefe 49a zu dem (nahezu) vollständigen Überlapp mit der radialen Eingriffstiefe 49b verändert. Die Höhe der einzelnen Zähne 80, 90 bleibt konstant. Der Außendurchmesser 64 der Zähne 80 definiert eine Außenkontur 68. Gegebenenfalls ergibt sich ein Öffnungswinkel an der Außenkontur 68, wenn diese z.B. leicht konisch verläuft.

Beispielhaft sind in Figuren 8b und 8c nur jeweils drei einzelne Zähne 80, 90 über einer Eingriffslänge 79 der Gewinde dargestellt. In Realität liegen die Gewindegänge dicht und spielfrei aneinander. Hier wird stark schematisch die radiale Eingriffstiefe 49 dargestellt und nicht ein exakter Schnitt. Deshalb wurden Zähne 80, 90 weggelassen.

In Fig. 8c ist eine Variante stark schematisch abgebildet, bei der die Zahnhöhe 96a über die Zähne 90 von links nach rechts zunimmt. Der jeweilige Kerndurchmesser 63, 74 bleibt z.B. konstant und die Zahnhöhe 96a (hier nur der Zähne 90) verändert sich, sodass über der Eingriffslänge 79 der Überlapp bzw. die radiale Eingriffstiefe 49 der Zähne 80, 90 variiert. Eine Zahnhöhe 86a der Zähne 80 bleibt hier konstant (oder ändert sich weniger als eine Zahnhöhe 96a der Zähne 90). Der freie Innendurchmesser verändert sich von einem Wert 73a zu einem Wert 73b.

In beiden Ausgestaltungen nach Fig. 8b und Fig. 8c verändert sich über der Eingriffslänge 79 die radiale Eingriffstiefe 49 der Windungen der Gewinde. Dadurch wird bewirkt, dass eine effektive Verteilung der Belastung der Verbindungselemente 41, 42 erfolgt. Gerade bei Verwendung unterschiedliche Materialien für die Verbindungselemente 41, 42 kann eine optimale Verteilung der Last erfolgen. Die Festigkeit kann erhöht werden. Das Kriechverhalten kann verbessert werden.

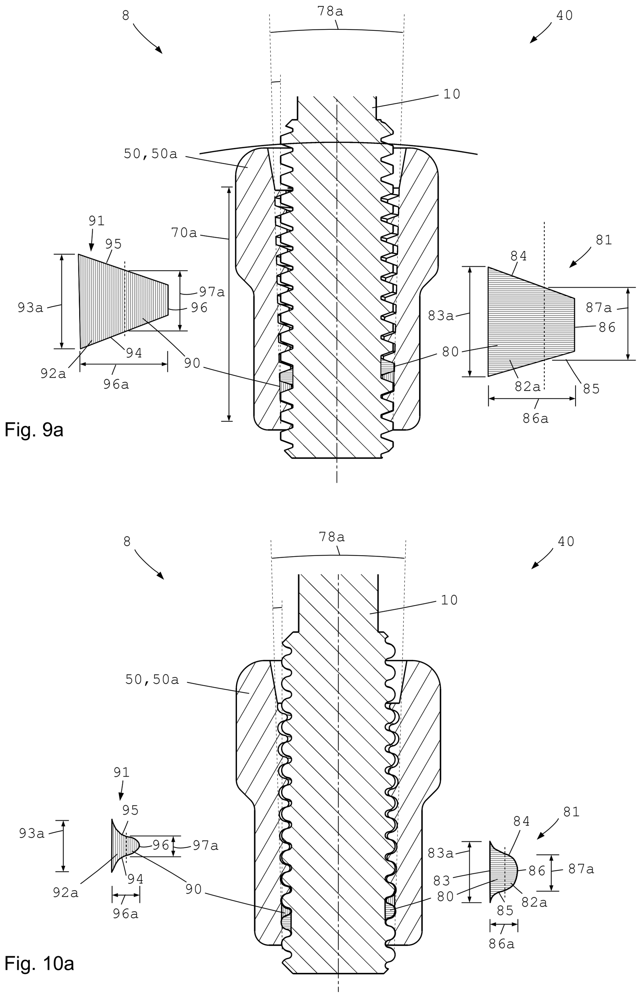

Fig. 9a zeigt einen Zusammenbau einer Speiche 10 und eines Speichennippels 50a eines Speichensystems 40, wobei die Gewinde 43, 44 als Trapezgewinde ausgebildet sind. Auch hier weisen die Zähne 80, 90 deutlich unterschiedliche Querschnitte 82, 92 und unterschiedliche Zahnformen 81, 91 auf. Die axiale Länge 83a der Zähne 80 an der Basis 83 ist erheblich größer als die axiale Länge 93a der Zähne 90 an deren Basis 93. Das gilt auch für eine radial mittlere Stelle 87 bzw. 97 mit einer axialen Länge 87a bzw. 97a. Das Innengewinde 70 ist konisch ausgebildet und weist an dem Kerndurchmesser und an dem freien Innendurchmesser einen konischen Verlauf auf. Das Außengewinde 60 der Speiche 10 ist zylindrisch ausgebildet, könnte aber auch leicht konisch ausgebildet sein.

Fig. 10a zeigt einen Zusammenbau einer Speiche 10 nach Fig. 3b mit einem Speichennippel 50a nach Fig. 6a. Die Gewinde 43, 44 sind hier in der Art eines Rundgewindes ausgebildet. Auch hier weisen die Zähne 80, 90 deutlich unterschiedliche Querschnitte 82, 92 mit unterschiedlichen Querschnittsflächen 82a, 92a und unterschiedliche Zahnformen 81, 91 auf. Die axiale Länge 83a der Zähne 80 an der Basis 83 ist erheblich größer als die axiale Länge 93a der Zähne 90 an deren Basis 93. Das gilt auch für eine radial mittlere Stelle 87 bzw. 97 mit einer axialen Länge 87a bzw. 97a. Das Innengewinde 70 ist konisch ausgebildet und weist an dem Kerndurchmesser und an dem freien Innendurchmesser einen konischen Verlauf auf. Das Außengewinde 60 der Speiche 10 ist zylindrisch ausgebildet, könnte aber auch leicht konisch ausgebildet sein.

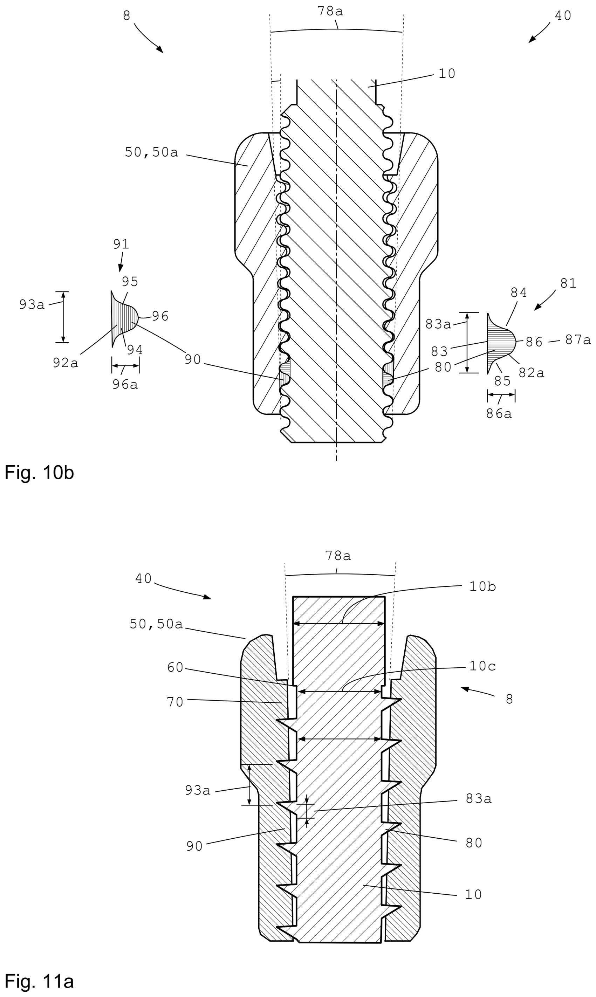

In Fig. 10b ist eine Variante des Ausführungsbeispiels von Fig. 10a abgebildet. Die Gewinde 60, 70 sind in Fig. 10b jeweils symmetrisch ausgebildet. Das Innengewinde 70 in dem Speichennippel 50a ist konisch ausgebildet. Damit nimmt die radiale Eingriffstiefe über der Eingriffslänge 79 in axialer Richtung zu der Nabe hin ab. Die Zähne 80 und 90 sind im Prinzip deckungsgleich ausgebildet.

Fig. 11a zeigt eine Ausgestaltung, bei der die Speiche 10 z.B. aus einem metallischen Werkstoff gefertigt wird. Das Außengewinde 43 der Speiche 10 kann gerollt werden, wobei dadurch der minimale Außendurchmesser 10c kleiner wird als der Grunddurchmesser 10b. Das Volumen der Zähne 80 wird dadurch beim Rollen zur Verfügung gestellt. Die axiale Zahnlänge 83a ist hier erheblich kürzer als eine axiale Länge 93a des Zahns 90 des Speichennippels 50a.

Insgesamt kann das Speichensystem 40 zuverlässig hohe Kräfte übertragen und kann auch selbsthemmend ausgebildet sein. Ein Verkleben von Speiche und Speichennippel ist deshalb nicht nötig. Der nicht vorhandene Klebstoff verbessert und vereinfacht die Wartungsmöglichkeiten. Eine Überprüfung und Einstellung der Speichenspannung kann jederzeit erfolgen.

Durch den Einsatz von Speichennippeln 50a aus Faserverbundwerkstoff kann ein leichterer Speichennippel zur Verfügung gestellt werden, der weiterhin auch eine mögliche Kontaktkorrosion verschiedener Metalle miteinander zuverlässig verhindert. Insbesondere, wenn Verstärkungselemente mit einem Glasfaseranteil eingesetzt werden, werden derartige Probleme zuverlässig verhindert. Es ist auch der Einsatz von Speichennippeln aus Metall oder anderen Werkstoffen zusammen mit Speichen aus Faserverbundwerkstoff möglich.

Weiterhin ist es möglich, ein Sägengewinde an beiden Verbindungselementen auszubilden und die Zähne des Koppelelementes erheblich breiter (in axialer Richtung länger) zu gestalten als die Zähne der Speiche. Das bietet sich für Speiche aus z.B. metallischen Werkstoffen an, die generell mit Koppelelementen oder konkret mit Speichennippeln aus anderen Materialien befestigt werden. Z.B. Speichennippel aus thermoplastischen Materialien mit oder ohne Verstärkungselementen. Oder Speichennippel aus Faserverbundwerkstoffen mit einer thermoplastischen Matrix oder auch anderen Matrixmaterialien. Koppelelemente aus nicht-metallischen Werkstoffen haben Vorteile, wenn sie in Kontakt mit anderen metallischen Materialien an anderen Laufradkomponenten (Felge, Nabe etc.).

Mit einer sich über der Eingriffslänge ändernder radialen Eingriffstiefe wird eine stabilere Verbindung ermöglicht. Gerade bei Kombination unterschiedlicher Werkstoffe und/oder bei dem Einsatz von Faserverbundwerkstoffen oder Kunststoffen oder Matrixmaterialien wird eine bessere Stabilität erreicht. Bei Einsatz von thermoplastischen Matrixmaterialien kann ein verbessertes Speichensystem zur Verfügung gestellt werden.

**Bezugszeichenliste:**

| | | | |
|---|---|---|---|
| 1 | Laufradkomponente | 32 | Außendurchmesser |
| 2 | Faserverbundwerkstoff | 35 | Querschnittsbereich, Langfaserbereich |
| 3 | Matrixmaterial | | |
| 4 | Verstärkungselemente | 36 | Querschnittsabschnitt Kurzfaserabschnitt |
| 5 | Langfaser | | |
| 6 | kürzere Verstärkungselemente | 37 | Endabschnitt |
| | | 39 | Zentralbereich |
| 6a | Kurzfasern | 40 | Speichensystem |
| 6b | Faserschnipsel | 41 | Verbindungselement, Speicheneinheit |
| 6c | Verstärkungspartikel | | |
| 7 | Längsachse, axiale Richtung | 41a | Grundkörper |
| 8 | montierter Zustand | 42 | Verbindungselement, Speicheneinheit |
| 10 | Speiche | | |
| 10a | Länge von 10 | 42a | Grundkörper |
| 10b | Grunddurchmesser | 43 | Gewinde, Außengewinde |
| 10c | minimaler Durchmesser | 44 | Gewinde, Innengewinde |
| 11 | Mittelstück | 45a | Sägengewinde |
| 11a | Länge von 11 | 45b | Rundgewinde |
| 12 | Querabmessung (minimal) | 45c | Trapezgewinde |
| 13 | Querabmessung (mittel) | 48 | Gewindesteigung von 43, 44 |
| 14 | Querabmessung (maximal) | 49 | radiale Eingriffstiefe |
| 15 | Speichenkörper | 49a | radiale Eingriffstiefe |
| 16 | Ende | 49b | radiale Eingriffstiefe |
| 17 | Ende | 50 | Koppelelement |
| 19 | Zentralbereich | 50a | Speichennippel |
| 20 | Endstück | 51 | Endabschnitt |
| 20a | Länge von 20 | 52 | Endabschnitt |
| 21 | Kopfabschnitt | 53 | Nippelkopf |
| 22 | Außendurchmesser | 53a | Kopfende |
| 23 | Verdickungsabschnitt | 53b | Anlagefläche |
| 24 | Stütz-, Zylinderabschnitt | 54 | Aufnahme |
| 25 | Querschnittsbereich | 55 | Nippelkörper |
| 26 | Querschnittsabschnitt | 55a | Länge |
| 28 | konusähnlicher Abschnitt | 56 | Durchmesser |
| 29 | Zentralbereich | 57 | Werkzeuganlage |
| 30 | Endstück | 57a | Schlüsselweite |
| 30a | Länge von 30 | 58 | Ende (abgerundet) |
| 59 | Ende (Werkzeugende) | 83 | Basis |
| 60 | Außengewinde | 83a | axiale Länge |
| 60a | Gewindelänge | 84 | Zahnflanke |
| 61 | Gewindeflanke (flacher) | 85 | Zahnflanke |
| 61a | Winkel (flacher) | 86 | Spitze |
| 62 | Gewindeflanke (steiler) | 86a | Zahnhöhe |
| 62a | Winkel (steiler) | 87 | radial mittlere Stelle |
| 63 | Kerndurchmesser, minimaler Durchmesser | 87a | axiale Länge |
| | | 88 | Zahnzwischenraum |
| 64 | Außendurchmesser, maximaler Durchmesser | 90 | Zahn |
| | | 91 | Zahnform |
| 65 | Gewindetal | 92 | Querschnitt |
| 66 | Flankenwinkel | 92a | Querschnittsfläche |
| 67 | Gewindetiefe | 93 | Basis |
| 68 | Außenkontur | 93a | axiale Länge |
| 68a | Öffnungswinkel | 94 | Zahnflanke |
| 70 | Innengewinde | 95 | Zahnflanke |
| 70a | Gewindelänge | 96 | Spitze |
| 71 | Gewindeflanke (flacher) | 96a | Zahnhöhe |
| 71a | Winkel (flacher) | 97 | radial mittlerer Bereich |
| 72 | Gewindeflanke (steiler) | 97a | axiale Länge |
| 72a | Winkel (steiler) | 98 | Zahnzwischenraum |
| 73a | freier Innendurchmesser | 100 | Fahrrad |
| 73b | freier Innendurchmesser | 101 | Rad, Vorderrad |
| 74 | Kerndurchmesser, maximaler Durchmesser | 102 | Rad, Hinterrad |
| | | 103 | Rahmen |
| 75 | Gewindetal | 104 | Gabel, Federgabel |
| 76 | Flankenwinkel | 105 | Hinterraddämpfer |
| 77 | Gewindetiefe | 106 | Lenker |
| 78 | Innenkontur | 107 | Sattel |
| 78a | Öffnungswinkel | 108 | Nabe |
| 79 | Eingriffslänge | 109 | Felge |
| 80 | Zahn | 111 | Ritzeleinrichtung |
| 81 | Zahnform | 112 | Tretkurbel |
| 82 | Querschnitt | | |
| 82a | Querschnittsfläche | | |

## Patentansprüche

1. Laufradkomponente (1) für ein Fahrzeug (100) und insbesondere für Fahrräder, umfassend ein Speichensystem (40) mit zwei miteinander zusammenwirkenden Verbindungselementen (41, 42), nämlich mit einem im Betrieb auf Zug belasteten und als Speiche (10) ausgebildeten Verbindungselement (41) und mit wenigstens einem als Koppelelement (50) ausgebildeten Verbindungselement (42), wie z.B. einem Speichennippel (50a), wobei sich die Speiche (10) in axialer Richtung (7) erstreckt und ein Mittelstück (11) und zwei Endstücke (20, 30) umfasst, um die Speiche (10) mittels der Endstücke (20, 30) lösbar mit einer Nabe (108) und mit einer Felge (109) zu verbinden, wobei die beiden Verbindungselemente (41, 42), nämlich das Koppelelement (50) und die Speiche (10), miteinander zusammenwirkende Gewinde (43, 44) aufweisen, um die Speiche (10) und das Koppelelement (50) miteinander zu verbinden, wobei eines der Gewinde (44) als Innengewinde (70) und eines der Gewinde (43) als Außengewinde (60) ausgebildet ist, **dadurch gekennzeichnet,**
**dass** im montierten Zustand (8) eine radiale Eingriffstiefe (49) der beiden miteinander verschraubten Gewinde (43, 44) über wenigstens einen Teil einer axialen Gewindelänge (60a, 70a) zunimmt, und dass in dem montierten Zustand (8) eine radiale Eingriffstiefe (49) über der Eingriffslänge (79) um wenigstens 25% zunimmt.

2. Laufradkomponente (1) nach Anspruch 1, wobei die radiale Eingriffstiefe (49) der beiden Gewinde (43, 44) in dem montierten Zustand (8) in axialer Richtung (7) zur Speichenmitte hin abnimmt.

3. Laufradkomponente (1) nach einem der vorhergehenden Ansprüche, wobei das Innengewinde (44) über wenigstens einen Teil der axialen Gewindelänge (60a, 70a) einen zunehmenden freien Innendurchmesser aufweist und z.B. konisch ausgebildet ist, sodass eine radiale Eingriffstiefe (49) der Gewinde (43, 44) in axialer Richtung (7) zunimmt.

4. Laufradkomponente (1) nach einem der vorhergehenden Ansprüche, wobei das Koppelelement (50) ein Kopfende (53a) mit einer Anlagefläche (53b) zur Abstützung aufweist und wobei die radiale Eingriffstiefe (49) in Richtung auf das Kopfende (53a) abnimmt.

5. Laufradkomponente (1) nach einem der vorhergehenden Ansprüche, wobei ein freier Innendurchmesser (73a) des Innengewindes (70) über einer axialen Länge (70a) des Innengewindes (70) in dem Koppelelement (50) zunimmt/abnimmt, und/oder wobei ein Kerndurchmesser (74) des Innengewindes (70) in dem Koppelelement (50) in axialer Richtung (7) konisch verläuft.

6. Laufradkomponente (1) nach einem der vorhergehenden Ansprüche, wobei eine Innenkontur (78) des Innengewindes (70) in dem Koppelelement (50) etwa konisch ausgebildet ist, und wobei ein Öffnungswinkel (78a) der Innenkontur (78) des Innengewindes (70) zwischen 1° und 7° beträgt,
und wobei die Innenkontur (78) des Innengewindes (70) in dem Koppelelement (50) in Richtung der Speiche (10) konisch ausgebildet ist.

7. Laufradkomponente (1) nach einem der vorhergehenden Ansprüche, wobei beide Gewinde (43, 44) wenigstens abschnittsweise konisch ausgebildet sind, wobei ein Öffnungswinkel (78) des einen Gewindes (44) erheblich größer ist als ein Öffnungswinkel (68) des anderen Gewindes (43), und wobei insbesondere ein Öffnungswinkel (68) des Gewindes (43) der Speiche (10) kleiner als 1° beträgt,
und/oder wobei ein Kerndurchmesser (74) des Innengewindes (70) in dem Koppelelement (50) sich weniger ändert als der freie Innendurchmesser (73a) des Innengewindes (70).

8. Laufradkomponente (1) nach einem der vorhergehenden Ansprüche, wobei das andere der beiden Gewinde im Wesentlichen zylindrisch ausgebildet ist.

9. Laufradkomponente (1) nach einem der vorhergehenden Ansprüche, wobei die Verbindungselemente (41, 42) in dem Bereich der Gewinde (43, 44) jeweils einen Grundkörper (41a, 42a) und davon radial (nach außen bzw. nach innen) abstehende Zähne (80, 90) aufweisen, und dass sich eine Zahnform (81) des Gewindes (43) der Speiche (10) von einer Zahnform (91) des Gewindes (44) des Koppelelements (50) erheblich unterscheidet, um die Festigkeit der Verbindung des Speichensystems (40) zu erhöhen.

10. Laufradkomponente (1) nach dem vorhergehenden Anspruch, wobei wenigstens die Zähne (80, 90) der Verbindungselemente (41, 42) wenigstens teilweise aus unterschiedlichen Materialien bestehen, und wobei sich die Festigkeiten der beiden Gewinde um weniger als 50% unterscheiden.

11. Laufradkomponente (1) nach einem der vorhergehenden Ansprüche, wobei wenigstens ein Gewinde (43, 44) in axialer Richtung (9) asymmetrisch ausgebildet ist.

12. Laufradkomponente (1) nach einem der vorhergehenden Ansprüche, wobei das Koppelelement (50) wenigstens einen metallischen Werkstoff umfasst.

13. Laufradkomponente (1) nach einem der vorhergehenden Ansprüche, wobei die Speiche (10) wenigstens teilweise aus einem metallischen Werkstoff und das Koppelelement (50) wenigstens teilweise aus einem thermoplastischen oder duroplastischen Material und insbesondere einem Faserverbundwerkstoff mit wenigstens einem Matrixmaterial und Verstärkungselementen (4) besteht.

14. Laufradkomponente (101, 102) nach einem der vorhergehenden Ansprüche, umfassend eine Felge (109) und eine Nabe (108), die über mehrere separate Speichensysteme (40) miteinander verbunden sind.

15. Laufradkomponente (1) für ein Fahrzeug (100) und insbesondere für Fahrräder, umfassend ein Verbindungselement (42) eines Speichensystems (40), nämlich ein Koppelelement (50), wie z.B. einem Speichennippel (50a), geeignet zur Verbindung mit einem als Speiche (10) ausgebildeten Verbindungselement (41), wobei das Koppelelement (50) ein Gewinde (44) aufweist, wobei das Gewinde (44) als Innengewinde (70) ausgebildet ist, um ein Außengewinde einer Speiche (10) mit dem Innengewinde (70) des Koppelelements (50) miteinander zu verbinden,
**dadurch gekennzeichnet,**
**dass** ein freier Innendurchmesser (73a) des Innengewindes (70) des Koppelelements (50) über wenigstens einen erheblichen Teil der axialen Gewindelänge (70a) zunimmt und z.B. einen konischen Verlauf aufweist.
